# EUROPÄISCHE PATENTSCHRIFT

(11) **EP 1 224 807 B1**
(45) Veröffentlichungstag und Bekanntmachung des Hinweises auf die Patenterteilung: **18.08.2004**
(21) Anmeldenummer: 00974412.9
(22) Anmeldetag: 18.10.2000
(51) Int. Cl.: H04N 7/167, G06F 1/00

(54) **VORRICHTUNG UND VERFAHREN ZUM KOPIERGESCHÜTZTEN VERTEILEN ELEKTRONISCHER DOKUMENTE**
DEVICE AND METHOD FOR THE COPY-PROTECTED DISTRIBUTION OF ELECTRONIC DOCUMENTS
DISPOSITIF ET PROCEDE POUR LA DISTRIBUTION PROTEGEE CONTRE LA COPIE DE DOCUMENTS ELECTRONIQUES

(30) Priorität: 18.10.1999 DE 19950267; 09.06.2000 DE 20010200 U
(43) Veröffentlichungstag der Anmeldung: 24.07.2002
(73) Patentinhaber: BrainShield Technologies, Inc., New York, NY 10022 (US)
(72) Erfinder: Wittkötter, Erland, Dr., 32257 Bünde (DE)
(74) Vertreter: Behrmann, Niels, Dipl.-Ing.
(86) Internationale Anmeldenummer: PCT/EP2000/010256
(87) Internationale Veröffentlichungsnummer: WO 2001/030080

(56) Entgegenhaltungen:
- WO-A-98/58306
- DE-A- 3 615 255
- DE-A- 19 932 703
- DE-C- 19 907 964

## Beschreibung

Die vorliegende Erfindung betrifft eine Vorrichtung zum kopiergeschützten Verteilen elektronischer Dokumente in einem öffentlich zugänglichen, elektronischen Datennetz, insbesondere dem Internet, nach dem Oberbegriff des Patentanspruchs 1. Ferner betrifft die vorliegende Erfindung ein Verfahren zum kopiergeschützten Verteilen elektronischer Dokumente, insbesondere zum Betreiben einer solchen Vorrichtung.

Durch die sich rasant ausbreitende Nutzung des Internets als Medium zur Distribution, zum Austausch und zum Vertrieb elektronischer Dokumente -- dazu werden im vorliegenden Fall neben Textdateien insbesondere auch Audio-, Video-, Animations-, Simulations- und Programmdateien sowie Mischformen von diesen gezählt -- stellt sich zunehmend das Problem einer wirksamen Zugriffskontrolle insbesondere auf wertvolle, urheberrechtsgeschützte Dateien sowie einer Verhinderung unauthorisierter Weitergabe unberechtigt gefertigter Kopien.

Bisherige, gängige Verfahren, den Urheberrechtsschutz von elektronisch über öffentliche Datennetze verteilten elektronischen (Nutzer-)Dateien zu verbessern, betreffen einerseits klassische Formen der Verschlüsselung solcher Benutzerdateien, andererseits ist es mittlerweile auch üblich, in (rechtmäßig in den Verkehr gebrachte) Kopien eines elektronischen Dokuments sogenannte elektronische Wasserzeichen einzubringen, nämlich individualisierende elektronische Markierungen, die -- für einen Benutzer des Dokuments im normalen Gebrauch unsichtbar -- gleichwohl das genaue Identifizieren eines vorliegenden Dokuments ermöglichen (mit dem möglichen Ziel, den Ursprung für unberechtigt verbreitete Kopien feststellen zu können).

Beide Vorgehensweisen besitzen jedoch den Nachteil, dass insbesondere gegenüber privaten Endnutzern eine einmal (unverschlüsselt bzw. entschlüsselt) in den Verkehr gebrachte Dokumentkopie vom Endnutzer für private Zwecke archiviert und benutzt wird, mit dem Ergebnis, dass dem Urheber des sich in einer elektronischen Datei widerspiegelnden Werkes ein beträchtlicher Schaden durch solche Nutzer entsteht, die im Besitz einer unberechtigt (und üblicherweise auch vergütungsfrei) erworbenen Kopie sind, und ein wirtschaftlicher Vorteil (Belohnung) gegenüber denen entsteht, die ansonsten das Dokument ordnungsgemäß erworben hätten.

Ein besonderes Problem bietet dabei die Distribution von Musikdateien über öffentliche Datennetze, insbesondere das Internet, und es ist davon auszugehen, dass nicht nur das Internet zu einem wichtigen (wenn nicht dominierenden) Medium für den elektronischen Vertrieb von Musikwerken werden wird, auch wächst mit der Attraktivität dieses Vertriebsweges das potentielle Risiko und der Schaden durch Raubkopierer, die selbst wiederum das Internet benutzen, um Raubkopien vergütungsfrei der Öffentlichkeit zugänglich zu machen. So ist das Geschäftsmodell einiger aktuell auf diesem Gebiet tätiger kommerzieller Unternehmungen explizit darauf ausgerichtet, das Internet als Medium zum Austausch elektronischer (Musik-) Dateien zu nutzen, vgl. etwa die Beispiele der Firmen Napster, Freenet, Gnutella.

Konkret hat sich, etwa im Fall von elektronisch über das Internet zu verteilender Audiodateien, das Dateiformat MP3 als Standard entwikkelt, wobei sowohl legal erworbene, als auch als Raubkopien von sog. Piraten-Sites (also unauthorisiert betriebenen, Raubkopien anbietenden Servern im Internet) heruntergeladene MP3-Dateien mittels Zusatzprogrammen gängiger Internet-Serviceprogramme, sog. Viewer (also Abspielgeräte für eine solche elektronische Datei), von einem Betrachter benutzt werden können.

Die sich explosionsartig ausbreitende Anzahl der Piraten-Sites, die oftmals von geographischen Serverstandorten aus betrieben werden, wo ein Vorgehen mit Mitteln des Urheberrechts impraktikabel ist, verschärft das Bedürfnis nach wirksamen Möglichkeiten zum kontrollierten Verteilen elektronischer Dokumente, insbesonders urheberrechtlich relevanter Werke, wie etwa Musikstücke, Videoclips, Filme usw., damit nicht eine Unkontrollierbarkeit der elektronischen Verbreitung derartiger Dokumente die zugrundeliegenden, künstlerischen und kreativen Tätigkeiten unattraktiv macht und zum Erliegen bringt.

Verschärft wird das Problem einer kopiergeschützten Distribution von elektronischen Dokumenten im Internet dadurch, dass eine wirksame Kontrolle der Abspieleinheiten auf Benutzerseite praktisch unmöglich ist. Wiederum am Beispiel von Musikdateien (MP3-Format) zeigt sich, dass praktisch das Erstellen von elektronischen Dateien (Dokumenten) im MP3-Format von digitalen Tonträgern (CD) nicht zu vermeiden ist, ebenso wie umgekehrt das Erzeugen von Musik-CDs aus MP3-Dateien. Eine wirksame Funktionsbeschränkung eines MP3-Players ist zudem allein schon deswegen nicht möglich, als stets bei einmaligen Öffnen (Abspielen) eines elektronischen Dokuments der direkte Zugriff auf den digitalen Datenstrom erfolgt und damit bereits eine Kopie (digital und damit ohne Qualitätsverlust) erstellt werden kann, das sog. Localloopback-Problem.

Die WO-A-98/58306 offenbart einen benutzerseitig abfragbaren Dokumentenserver. Auf Benutzeranfrage werden ausführbare Programmkomponenten vom Server übermittelt. Benutzerseitig ausgeführt laden diese die gewünschten Inhalte in geschützter Form von einem Server. Dann wird benutzerseitig ein sogenannter Lizenzcode ausgeführt, um bei vorliegender Berechtigung des Benutzers die gewünschte Information nutzbar zu machen, darzustellen oder zu erzeugen. Ggf. werden fehlende Berechtigungsinformationen vom Server eingeholt.

Aufgabe der vorliegenden Erfindung ist es daher, ein System zum kopiergeschützten Verteilen elektronischer Dokumente insbesondere in einem öffentlichen elektronischen Datennetz, etwa im Internet, nach dem Oberbegriff des Anspruchs 1 zu schaffen, bei welcher zugunsten eines Dokumentanbieters erreicht werden kann, dass zum einen ein Dokumentnutzer nur noch authorisierte elektronische Dokumente (üblicherweise nach einer durchgeführten finanziellen Transaktion zur Abgeltung des Interesses des Dokumentanbieters) nutzen kann, und wodurch darüber hinaus auch Möglichkeiten geschaffen werden, die weitere Verbreitung bereits auf Piraten-Sites liegender elektronischer Dokumente unattraktiv zu machen und damit einzudämmen.

Die Aufgabe wird durch das System mit den Merkmalen des Patentanspruchs 1 sowie das Verfahren mit den Merkmalen des Patentanspruchs 20 gelöst; vorteilhafte Weiterbildungen sind in den Unteransprüchen beschrieben.

In erfindungsgemäßer Weise findet die Verteilung elektronischer Dokumente, also etwa von MP3-Audiodateien oder JPEG-Bilddateien, bevorzugt mit Hilfe von Internet-Dokumentenservern, in verschlüsselter Form statt, wobei erfindungsgemäß die verschlüsselte Form der jeweiligen elektronischen Dokumente so aussieht, dass die Tatsache einer Verschlüsselung durch die beteiligten Computer- bzw. Rechnereinheiten ohne inhaltliche Prüfung des betreffenden Dokuments nicht erkennbar ist. Mit anderen Worten, eine verschlüsselte MP3-Audiodatei sieht hinsichtlich ihres Datenformats bzw. ihrer Dateistruktur genauso aus, wie eine unverschlüsselte MP3-Audiodatei, und lediglich durch Abspielen (Öffnen) der Datei mit einem entsprechenden Player (Viewer) zeigt sich, dass die verschlüsselte Datei ein nicht brauchbares, üblicherweise völlig wirres und keinen inhaltlichen Sinn gebendes Ergebnis erzeugt. So ist auch der Begriff "vollständig ablauffähig" im Rahmen der Erfindung zu verstehen: Eine verschlüsselte Form einer Audio- oder Text- oder Videodatei bleibt eine entsprechende Datei desselben Formats und derselben Struktur, nur mit einem inhaltlich (teilweise drastisch) abweichenden, zur Unbrauchbarkeit führenden Ergebnis beim Ablaufen mittels der zugehörigen Wiedergabefunktionalität. Entsprechendes gilt für vollständig ablauffähige, erfindungsgemäß verschlüsselte Programmdokumente: Diese sind ausführbar und besitzen sämtliche Funktionen; die Ergebnisse bzw. Ausgaben dieser Funktionen sind jedoch sinnlos bzw. unbrauchbar.

Neben der bereits durch das Verschlüsseln erreichten Sicherheit (ein unauthorisierter Benutzer der verschlüsselten Datei wird diese nicht nutzen und nur verschlüsselt weitergeben können), bietet das erfindungsgemäße Vorgehen die Möglichkeit, mit einer großen Anzahl von in der erfindungsgemäßen Weise -- bevorzugt jeweils individuell, unter Vermeidung gleicher Verschlüsselungsergebnisse -- verschlüsselten elektronischen Dokumenten existierende Dokumenten-Servereinheiten, insbesondere Piraten-Sites, zu beaufschlagen und so, je nach Volumen und Anzahl aufgespielter, verschlüsselter Dokumente, dafür zu sorgen, dass auf die betreffende Servereinheit zugreifende Benutzer nach mehrfachem Feststellen, dass eine langwierig und mühsam heruntergeladene MP3-Audiodatei (die bei einem kurzen, etwa 3-minütigem Musikstück bereits Größenordnungen von mehreren MBytes erreichen kann) unbrauchbar ist, das Interesse verlieren und möglicherweise geneigt sein werden, das elektronische Dokument legal und unproblematisch zu erwerben und dabei die verschlüsselte und so unbrauchbar gemachte Datei nicht einfach zu löschen, sondern aktiv zu nutzen.

Die Vorliegende Erfindung deckt auch diese Möglichkeit mit ab: Die im Rahmen der vorliegenden Erfindung durch die Signatureinheit aufgebrachte oder natürlich darin enthaltene elektronische Markierung (Signatur) identifiziert das elektronische Dokument hinsichtlich der für das Dokument zum Entschlüsseln notwendigen Rekonstruktionsdatei eindeutig, so dass die am verschlüsselten Dokument haftende elektronische, Markierung (Signatur) benutzt werden kann, um mittels der Zuordnungseinheit (etwa in der Art eines relationalen Datenbanksystems) entweder unmittelbar auf die notwendige Rekonstruktionsdatei oder -anweisungen aus der Datenbank zuzugreifen, oder aber eine (Internet-) Adresse zu erhalten (etwa als Hyperlink), über welche dann ein entsprechender Rekonstruktionsserver als Rekonstruktionsdatenspeichereinheit mit der notwendigen Datei angesprochen werden kann. (Im Rahmen der vorliegenden Erfindung soll der Begriff Markierung" bzw. "Signatur" als identifizierendes Merkmal eines elektronischen Dokumentes verstanden werden, welches z.B. durch Berechnen (mittels eines Algorithmus oder einer anderen Funktion), durch Extraktion, Vergleich, Abfrage externer Dienste o.ä. erzeugt wird und eine eindeutige reproduzierbare Kennung ermöglicht).

Dieser Link kann dann in der für den Urheber des elektronischen Dokuments gewünschten Weise zur Grundlage eines Transaktions- und Abrechnungsprozesses gemacht werden, indem nämlich einem zugreifenden Benutzer, der die zur elektronischen Signatur des von ihm heruntergeladenen, verschlüsselten Dokuments passende Rekonstruktionsdatei sucht, diese gegen entsprechende Vergütung und/oder Registrierung zur verfügung gestellt wird, wobei diese Rekonstruktionsdatei insbesondere auch weitere Steuerungsfunktionen vornehmen kann, etwa ein nur zeitlich begrenztes Recht eines Benutzers zum Zugreifen auf das unverschlüsselte Dokument, das Recht nur auf Teile des Dokuments zuzugreifen, (etwa um einen Musiktitel anzuspielen), usw.

Die vorliegende Erfindung bietet zahlreiche Realisierungsmöglichkeiten, und lediglich exemplarisch soll, auch in der folgenden Beschreibung eines Ausführungsbeispiels, auf Audiodateiformate, wie etwa MP3, Bezug genommen werden. Im Rahmen der Erfindung umfasst der Begriff "Dokumentdatenstruktur" daher auch jegliche, in einer elektronischen Datei auftretende, struktur- oder formatinhärente, begrenzte Informationskomponenten (auch "Datenpaket" genannt); weitere Beispiele sind sog. Frames in Video- oder Audiodateien, oder einzelne Wörter bzw. Sätze in Textdokumenten, die eine inhaltliche bzw. inhaltsbezogene Manipulation zum Zweck der Verschlüsselung ermöglichen, ohne dass sich der Datenformat-(Datenstruktur-)Charakter der zugrundeliegenden Dateiform ändert.

Eine besonders günstige Möglichkeit, diese Verschlüsselung im Rahmen der vorliegenden Erfindung zu bewirken, ist die sog. semantische Verschlüsselung (siehe DE-A-180 327 03).

Konkret ermöglicht daher das weiterbildungsgemäß vorgesehene Vertauschen, Entfernen, Hinzufügen und/oder Austauschen der einzelnen inhaltswirksamen Komponenten das Erreichen eines verschlüsselten Dokuments, welches, in der erfindungsgemäß gewünschten Weise hinsichtlich seiner Struktur von einem unverschlüsselten Dokument nicht unterscheidbar ist, gleichwohl in der inhaltlichen Würdigung -- etwa als Videosequenz mit völlig unzusammenhängenden (teilweise fehlenden) Einzelbildern oder vertauschten Zwischenbildern, (sog. Intraframes) -keinen Nutzwert für einen unauthorisierten Benutzer mehr besitzt.

Weiterbildungsgemäß realisiert wird dies durch die Funktionalität der Verschlüsselungseinheit, welche in der Lage ist, aus einem ursprünglichen, zu schützenden elektronischen Dokument (nämlich der ursprünglichen Datenmenge bzw. Nutzdatei) die semantisch verschlüsselten Volumendaten nebst Schlüsseldaten als Rekonstruktionsdatei zu erzeugen. So ist insbesondere die erfindungsgemäße Analyseeinheit vorgesehen, um im Rahmen der vorgegebenen Formatstruktur und/oder Grammatik des ursprünglichen Dokuments (z.B. MP3) die Voraussetzung für eine nachfolgende inhalts- bzw. sinnbezogene Verschlüsselung zu schaffen, und die der Analyseeinheit nachgeschaltete Manipulationseinheit nimmt dann die Kernoperationen der semantischen Verschlüsselung, nämlich das Vertauschen, Entfernen, Hinzufügen und Austauschen, auf die Informationskomponenten der ursprünglichen Datenmenge, unter Berücksichtigung der analysierten Formatstruktur und Grammatik, vor.

Dabei ist es besonders geeignet, etwa die Operationen des Vertauschens oder Austauschens so vorzunehmen, dass eine betreffende Informationskomponente mit bzw. durch inhaltlich, strukturell oder grammatikalisch äquivalente Informationskomponenten ersetzt wird, insoweit also das Resultat der Operation nach wie vor scheinbar sinnvoll bleibt. Die weiterbildungsgemäß vorgesehene Äquivalenzeinheit ermöglicht im Rahmen der vorliegenden Erfindung die Identifikation bzw. die Auswahl geeigneter äquivalenter Informationskomponenten für diese oder andere Operationen.

Gemäß einer weiteren, bevorzugten Weiterbildung dieses Erfindungsaspekts findet zudem eine Operation durch die Verschlüsselungseinheit unter Berücksichtigung der Grammatik, des Formats oder des Syntax des ursprünglichen Dokuments statt: Durch Wirkung der bevorzugt vorgesehenen semantischen Regeleinheit ist nämlich die erfindungsgemäß vorgesehene Manipulationseinheit in der Lage, wiederum ein Verschlüsselungsergebnis zu erzeugen, welches eine der Ursprungsdatei entsprechende grammatikalische, formatmäßige und/oder syntaktische Struktur besitzt, so dass also nicht nur im Hinblick auf die jeweiligen einzelnen Informationskomponenten (z.B. Worte in einem Text oder Frames in einer MP3-Datei) Äquivalenz gegeben ist, sondern auch im Hinblick auf die Strukturen und/oder formatmäßigen Anordnungen (also z.B. die Anordnung von Begriffen in einem Satz nach den Regeln der Grammatik) regelkonform ist und insoweit ohne inhaltliche Prüfung nicht erkennen läßt, dass eine den Verschlüsselungseffekt bewirkende Operation auf die Informationskomponenten stattgefunden hat.

Gemäß einer weiteren, bevorzugten Weiterbildung ist der Manipulationseinheit eine Steuerungseinheit zugeordnet, welche den Verschlüsselungsbetrieb (d.h. die Anwendung und Wirkung der einzelnen verschlüsselnden Operationen) randomisiert: Durch Erzeugen und Berücksichtigen einer Zufallskomponente, z.B. einer in ansonsten bekannter Weise erzeugten Zufallszahl und deren Berücksichtigung bei dem Vornehmen einer davon abhängigen Anzahl von Verschlüsselungsoperationen, ist sichergestellt, dass ein Verschlüsseln desselben Ursprungsdokuments stets zu einem verschiedenen Ergebnis führt, also die Verschlüsselung selbst unter ansonsten identischen Bedingungen nie dasselbe Verschlüsselungsergebnis erzeugt. Auch mit dieser Maßnahme läßt sich die Sicherheit der vorliegenden Erfindung weiter erhöhen.

Generell hat es sich zudem als besonders bevorzugt bewährt, einem die Verschlüsselung anwendenden Benutzer die Möglichkeit zu geben, eine vorbestimmte Verschlüsselungstiefe (und damit eine Verschlüsselungssicherheit) vorzuwählen: Beim beschriebenen Erfindungsaspekt der semantischen Verschlüsselung korreliert die Frage der Verschlüsselungstiefe mit der Anzahl der durchgeführten, die Verschlüsselung bewirkenden Basisoperationen des Vertauschens, Entfernens, Hinzufügens oder Austauschens, und bestimmt insoweit auch das Volumen der erzeugten Schlüsseldatei. Durch Einstellen eines entsprechenden Parameters kann somit der Nutzer faktisch eine Sicherungsstufe der durchzuführenden Verschlüsselungsoperationen bestimmen, wobei jedoch, im Gegensatz zu bekannten, klassischen Verschlüsselungsverfahren, in jedem Fall das Ergebnis der semantischen Verschlüsselung ein scheinbar korrektes (d.h. formal scheinbar unverschlüsseltes) Ergebnis bringt, und die Frage, ob überhaupt eine Verschlüsselung stattgefunden hat, ohne inhaltliche Prüfung nicht möglich ist. Insoweit lässt sich also durch diesen durch die semantische Verschlüsselung erstmals erreichten Effekt der Unsicherheit sogar eine gewisse Schutzwirkung erreichen, ohne dass überhaupt eine einzige Verschlüsselungsoperation im vorbeschriebenen Sinne durchgeführt wird.

Als weitere, besonders bevorzugte Realisierungsform der vorliegenden Erfindung hat es sich zudem herausgestellt, mittels der weiterbildungsgemäß vorgesehenen Konvertierungseinheit die Volumendaten als Dokument auszugeben, während die Schlüsseldatei als lauffähige Scriptdaten einer geeigneten Scriptsprache, z.B. Visual Basic (Script), Javascript usw., erzeugt und ausgegeben werden kann, mit dem Vorteil, dass insbesondere im Zusammenhang mit Netz- oder Internet-basierten Anwendungen dann in besonders einfacher Weise ein Wiederherstellen der Ursprungsdaten erfolgen kann, im einfachsten Fall durch Ablaufen des das Wiederherstellen unmittelbar bewirkenden Scripts (welches über eine geeignete, das Interesse des Schutzsuchenden berücksichtigende Verbindung herangeführt worden ist).

Gerade eine Realisierung der Rekonstruktionsdatei als Script eröffnet zudem besonders geeignet eine alternative oder zusätzliche Möglichkeit der Sicherung des elektronischen Dokuments gegen Kopieren: Gemäß einer Ausführungsform der Erfindung beeinflusst die Rekonstruktionsdatei nicht (allein) das elektronische Dokument (und macht es damit brauchbar oder unbrauchbar), sondern wirkt unmittelbar auf die Funktionsweise der Wiedergabeeinheit und/oder der Rekonstruktionseinheit: Ein solcher Fall liegt beispielsweise vor, wenn die Wiedergabe (selbst) in einem Viewer scriptgesteuert und damit abhängig von Parametern oder Befehlen ist, und die Erfindung ermöglicht hier eine Manipulation der Wiedergabefunktionalität (entsprechend der Rekonstruktionsfunktionalität bei der Rekonstruktionseinheit). Ein anderes Beispiel würde die Situation beschreiben, dass eine zur Wiedergabe oder Rekonstruktion benötigte Programmklasse oder -methode des Rekonstruktions- oder Wiedergabeobjekts zu Sicherungszwecken individualisiert herangeführt oder (aus einer Vielzahl von in Frage kommenden, vorhandenen) ausgewählt wird, nach Maßgabe von (bevorzugt als Scriptdatei vorliegenden) Rekonstruktionsdaten. Im Extremfall liegt die durch die Erfindung erreichte Sicherungswirkung allein in einer Verhinderung einer ordnungsgemäßen Wiedergabe bzw. deren Realisierung durch die Rekonstruktionsdatei bei ansonsten unverändertem Dokument.

Es liegt im Rahmen der vorliegenden Erfindung, entweder die Signaturprüfung und -verwaltung sowie die Zuordnung der jeweiligen Rekonstruktionsdateien in einer Hand (also etwa beim Dokumentanbieter) zu belassen, alternativ ist insbesondere auch vorgesehen, in der Art eines Internet-weiten Verbundes verschiedener Dokumenteanbieter, eine Mehrzahl von Rekonstruktions-Datenspeichereinheiten vorzusehen, auf die dann bevorzugt zentrale, gemeinsame Zuordnungseinheiten durch entsprechende Hyperlinks oder andere Verknüpfungsmethoden hinweisen.

Dabei liegt es auch im Rahmen der Erfindung, die Rekonstruktions-Datenspeichereinheit sowohl mittels einer oder mehrerer Servereinheiten über das Internet zu realisieren (in diesem Fall würde dann im Rahmen der vorliegenden Erfindung auch von "Rekonstruktions-Servereinheit" gesprochen), als auch die Rekonstruktions-Datenspeichereinheit lokal vorzusehen, insbesondere in der Art einer benutzerseitig, z. B. auf einem für die Zugriffszwecke konfigurierten PC oder LAN eingerichteten lokalen Serverfunktionalität. Hieraus ergibt sich, dass die vorliegende Erfindung zwar besonders bevorzugt ist, zusammen mit einem öffentlich zugänglichen elektronischen Datennetz, insbesondere dem Internet, betrieben zu werden, gewisse Ausführungsformen der Erfindung sind jedoch auch denkbar, wo etwa der Ladezugriff auf die Dokumenten-Servereinheit ebenfalls lokal erfolgt, wie auch der Zugriff auf die Rekonstruktions-Datenspeichereinheit (Rekonstruktions-Servereinheit) sowie der Zugriff auf die Zugriffseinheit. Ebenfalls liegt es im Rahmen der vorliegenden Erfindung, die Rekonstruktionseinheit lokal vorzusehen, diese aber auch alternativ (oder gleichzeitig) serverseitig vorzusehen.

Auch wenn nicht hinter jedem, im Rahmen der vorliegenden Erfindung kopiergeschützten Verteilen automatisch ein unmittelbares finanzielles Interesse eines Dokumenteanbieters stehen muss (oftmals dürfte es dem tatsächlichen Interesse viel eher entsprechen, Kontrolle zu behalten und lediglich unautorisierte Verbreitung auszudünnen), so kommt gerade bei zunehmender Kommerzialisierung des Internets und dem Etablieren des Internets als effektivem Vertriebsweg für Audiodateien geeigneten Abrechnungsmodalitäten eine besondere Bedeutung zu.

Weiterbildungsgemäß ist daher vorgesehen, dass der Benutzer, der sich von einer Dokumenten-Servereinheit bereits eine (verschlüsselte) Dokumentkopie beschafft hat, den Umstand der Verschlüsselung beim Versuch des Abspielens feststellt, und ihm dann durch entsprechende Funktionalität seiner Zugriffssoftware (geeignet wäre dies über Plug-ins in herkömmliche Internet-Browser-Programme zu lösen) geboten wird, zunächst -- kostenlos -- durch On-line-Abfrage der Zuordnungseinheit festzustellen, ob und wo eine entsprechende Rekonstruktionsdatei existiert, und ihm dann der die Zuordnungseinheit (als Datenbanksystem) anbietende Server entweder bereits unmittelbar die Rekonstruktionsdatei zum Download zur Verfügung stellt, oder aber einen Hyperlink zu einem entsprechenden, gesonderten Rekonstruktionsserver anbietet. Mittels üblicher Identifikations- und Abrechnungsprozesse, z.B. durch Eingabe von Kreditkarteninformationen, kann dann das Übertragen der Rekonstruktionsdatei an den Benutzer (und somit dessen Möglichkeit auf das unverschlüsselte Dokument Zugriff zu nehmen) mit der gewünschten finanziellen Transaktion verbunden werden, wobei zu diesem Zweck insbesondere beim Rekonkstruktionsserver entsprechende Funktionsmodule implementiert sind.

Um im Rahmen der Erfindung die Markierung (auch Signatur genannt) zu realisieren, ist es lediglich notwendig, dass eine zum Herunterladen bereitstehende, verschlüsselte elektronische Dokumentdatei so eindeutig elektronisch identifiziert ist, dass mit Hilfe dieser Signatur eine zugehörige Rekonstruktionsdatei gefunden werden kann. Gleichwohl bietet es sich bevorzugt an, das Berechnen einer solchen Signatur auf der Basis von ansonsten allgemein bekannten Algorithmen sowie hinsichtlich der Gesamtdatei so vorzunehmen, dass eine Änderung der Reihenfolge der Dateninhalte der Datei oder das Löschen, bzw. Andern bzw. Einfügen von Daten durch entsprechende Auswirkungen auf die Signatur festgestellt werden können.

Genauer gesagt liegt ein bevorzugter Weg zum Erzeugen der Signatur darin, mittels eines (sowohl anbieterseitig als auch nutzerseitig bekannten und ausgeführten) Algorithmus aus den Daten der Datei eine Kenngröße zu berechnen, die damit insoweit diese Datei und ihre Struktur, insbesondere auch die Reihenfolge der Dateninhalte, eindeutig identifiziert. Eine Manipulation in der Datei, insbesondere in der Reihenfolge der Dateninhalte, würde dann dazu führen, dass bei (erneutem) Berechnen der Signatur diese unterschiedlich von der ursprünglichen Signatur wäre, mithin also nicht nur konkrete (verschlüsselte) Dokumentdateien eindeutig identifiziert werden können, sondern insbesondere auch Änderungen daran feststellbar werden. (In diesem Zusammenhang ist noch zu erläutern, dass das Berechnen bzw. Ermitteln einer Signatur auf Clientseite auch passiv geschehen kann, insbesondere durch serverseitige Steuerung bzw. Abfrage.)

Wichtig für die vorliegende Erfindung ist es, dass mit Hilfe eines Online-Kontaktes die einem Benutzers beim Herunterladen einer verschlüsselten Datei überlassene Signatur der Zuordnungseinheit zugänglich gemacht wird, wodurch dann in der beschriebenen Weise der Benutzer einen Pfad gewiesen bekommt, wie er sich die konkret benötigte Rekonstruktionsdatei beschaffen kann. Weiterbildungsgemäß ist es daher bevorzugt, insbesondere diese Vorgänge, nämlich primär das Anmelden der Signatur bzw. das Abfragen eines zugeordneten Pfades für die Rekonstruktionsdatei, automatisiert durchzuführen, beispielsweise durch entsprechende Funktionalität des Plug-ins in der Internet-Zugangs- und Abspielsoftware des Benutzers.

Weiterbildungsgemäß vorteilhaft ist es zudem, in ansonsten bekannter Weise eine ordnungsgemäß wiederhergestellte Datei, nämlich nach dem Beschaffen einer Rekonstruktionsdatei und dem Zusammenfügen mit dem verschlüsselten elektronischen Dokument, mit einem individualisierenden elektronischen Wasserzeichen zu versehen, so dass die Möglichkeit einer Verfolgung von unerlaubten Weitergaben des rekombinierten Dokuments besteht. Bevorzugt ist es zudem, diese Wasserzeichenbildung mittels in der Rekonstruktionsdatei enthaltener Rekonstruktionsanweisungen zu realisieren, so dass in diesem Fall eine Rekonstruktionsdatei doppelten Zweck erhält: Wiederherstellung und eindeutige Identifikation des wiederhergestellten Dokuments.

Das erzeugte Wasserzeichen kann zusätzlich mit einem Zeitstempel versehen werden. Das Charakteristische an einem Wasserzeichen ist, dass es nur von dem Herausgeber erkannt werden kann, und dass es auch unter minimalen Änderungen der Daten den seinen Benutzer identifizierenden Charakter nicht verliert.

Im Ergebnis bietet somit die vorliegende Erfindung die Möglichkeit, ein umfassendes System zum Schutz von Urheberrechten an elektronischen Dokumenten im elektronischen Datennetz, insbesondere im Internet, zu schaffen, welches das berechtigte Interesse der Dokument-(Inhalts)Anbieter an einer Verhinderung von Mißbrauch und möglicher Kompensation mit dem Interesse (ehrlicher) Nutzer in Einklang bringt, die Vorteile, etwa des Internets zu nutzen, um kurzfristig, schnell und bequem (und damit im Ergebnis auch wiederum kostengünstig) die volle Vielfalt elektronischer Medien nutzen zu können. Dagegen kann durch die vorliegende Erfindung erreicht werden, dass nur noch solche Webseiten bzw. Server (ohne weitere Transaktion) brauchbare elektronische Dokumente anbieten, die vor dem Aufspielen auf einen Server ein betreffendes Dokument, z.B. MP3-Musikstück, durch Abhören vollständig überprüft haben (sog. Qualitäts-Sites). Sollten derartige serverseitige Anbieter jedoch missbräuchlich vorgehen, würden sie, bereits bedingt durch den betriebenen Aufwand, zwangsläufig Aufmerksamkeit erregen und damit auch das Bekämpfen unter Gesichtspunkten des Urheberrechtsschutzes leichter ermöglichen.

Während bislang insbesondere aus Anbieter- bzw. Herausgebersicht eine wirksame Kontrolle überhaupt nicht möglich war, wird dies durch die vorliegende Erfindung durch das Verlagern einer Zuständigkeit und Verantwortlichkeit für die legale Vervielfältigung an die Interneteinheiten "elektronische Zuordnungseinheit" bzw. "Rekonstruktions-Servereinheit", in Verbindung mit den nutzerseitigen, lokalen Einheiten, erreicht.

Die Verantwortung des Herausgebers für die Weiterverteilung endet gemäß den zur Zeit geltenden Vereinbarungen zwischen einem Herausgeber und den Verwertungsgesellschaften nach der Übertragung und den entsprechend vereinbarten geschäftsmäßigen Abrechnungen der Daten zwischen Publikationsserver und Kunde.

Gegenüber den Verwertungsgesellschaften besteht dann hauptsächlich die Verpflichtung, die Anzahl der direkten Downloads nachzuweisen. Eine an die Verwertungsgesellschaft zu zahlende Gebühr wird über die Anzahl der möglichen Weiterverbreitungen, aus statistischen Daten generiert, geschätzt. In diesem Sinne kann ein aktuelles Distributionskonzept mit der Metapher einer herausgeberseitigen Mautstelle bezeichnet werden.

Wenn, wie durch die vorliegende Erfindung erreicht, durch bzw. für das verteilte Dokument eine Clientsoftware installiert werden muss, die anschließend einen Serverkontakt zur Rekonstruktion des unverschlüsselten Inhalts erzwingt, dann wird somit eine benutzer- bzw. clientseitige Mautstelle geschaffen, die weitere Vorteile gegenüber einer serverseitigen besitzt. So kann, auch wenn keine materielle (finanzielle) Kompensation verlangt wird, durch die Übertragung einer Information auf dem Signatur- oder Freischaltserver eine sehr genaue Markt-, Verwendungs- und Benutzungsstatistik realisiert werden. Wenn erfindungsgemäß eine Nutzung durch einen Benutzer genauer registriert werden kann, dann besteht auch für einen Anbieter von digitalen Dokumenten im Internet nur die Verpflichtung, die an eine konkrete Benutzung gebundenen Lizenzen bzw. Gebühren an eine Verwertungsgesellschaft abführen zu müssen. Insbesondere ergibt sich damit auch die Chance, eine Vergütung der Urherberrechtsinhaber eines mittels der vorliegenden Erfindung geschützten Inhalts gerechter zu gestalten und zuzuordnen, da die vorliegende Erfindung durch die Nutzungserfassung und - registrierung weiterbildungsgemäß etwa auch die Basis für statistische Erkenntnisse über Nutzungsverhalten und Nutzung gewisser elektronischer Dokumente ermöglicht.

Darüber hinaus können neue Vermarktungsmodelle entwickelt werden, bei denen etwa die Benutzung von digitalen Dokumentdateien (da nunmehr besser erfassbar) durch einen Server bzw. Sender im Rahmen von Werbung oder aus Imagegründen bezahlt wird.

Weitere Vorteile, Merkmale und Einzelheiten der Erfindung ergeben sich aus der nachfolgenden Beschreibung bevorzugter Ausführungsbeispiele sowie anhand der Figuren; diese zeigen in
- Fig. 1:: ein schematisches Blockschaltbild der Vorrichtung zum kopiergeschützten Verteilen elektronischer Dokumente gem. einer ersten, bevorzugten Ausführungsform und
- Fig. 2:: ein schematisches Blockschaltbild mit einem Realisierungsbeispiel der Verschlüsselungseinheit 24 aus Fig. 1.

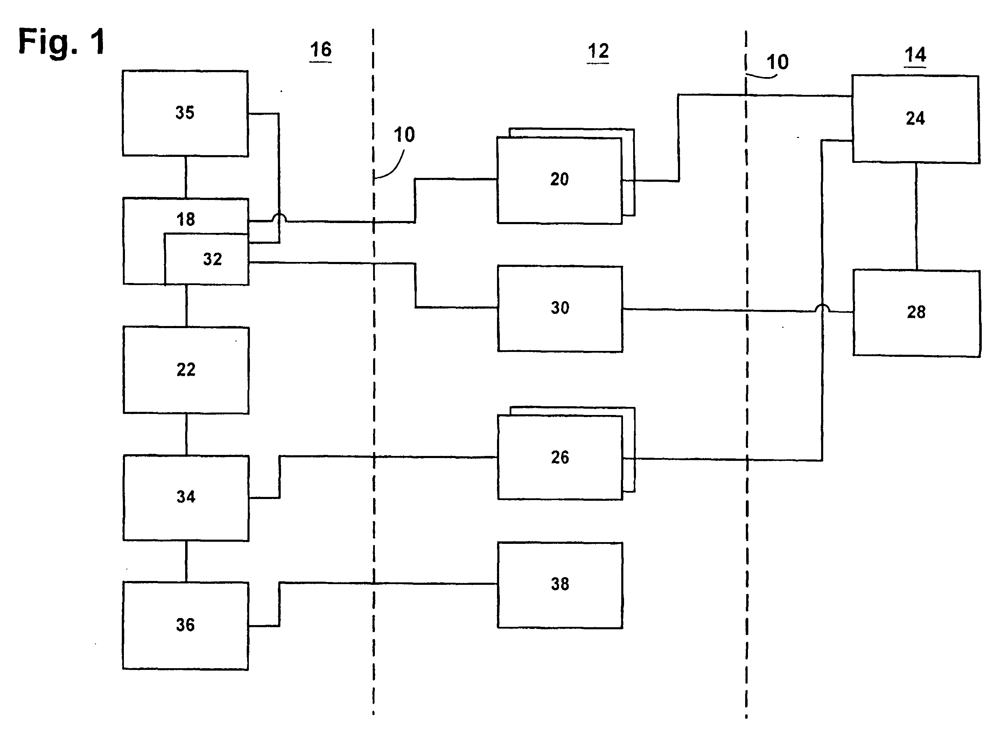

Das in Fig. 1 graphisch dargestellte System trennt mittels symbolischer Begrenzungen 10 ein öffentlich zugängliches, elektronisches Datennetz, im vorliegenden Fall das world-wide-web (www) als Internet-System 12, von einem Anbieter 14, im vorliegenden Fall ein Anbieter von elektronisch über das Netz 12 zu vertreibenden digitalen Tondokumenten, bzw. von einem Benutzer 16, der mittels einer symbolisch gezeigten Zugriffseinheit 18 (üblicherweise eine mittels gängiger Internet-Zugangssoftware ausgestattete Rechnereinheit) in ansonsten bekannter Weise auf eine über das elektronische Datennetz 12 zugängliche Dokument-Servereinheit 20 zugreifen kann. Dies erfolgt anhand allgemein zugänglicher, üblicher Internet-Protokolle, beispielsweise TCP-IP, HTTP bzw. FTP, wobei die Dokument-Servereinheit 20 zum Darstellen einer Auswahl verschiedener elektronischer Dokumente für eine mittels der Station 18 zugreifbare sowie zum nachfolgenden Ermöglichen des Herunterladens (Download) einer ausgewählten elektronischen Datei ausgebildet ist.

Insoweit handelt es sich um gängige Technologien aus dem Stand der Technik, die keiner näheren Erläuterung bedürfen.

Bei den gemäß dem vorliegenden Ausführungsbeispiel angebotenen Dokumenten handelt es sich um sog. Sound- bzw. Musikdateien, die nach dem MP3-Dateiformat erstellt sind und über eine geeignete Abspieleinheit 22, die besonders bevorzugt Teil der benutzerseitigen Zugriffseinheit 18 oder dieser zugeordnet ist, abgespielt werden kann (Player bzw. Viewer als Abspieleinheit; diese sind geeignet, das MP3-Dateiformat zu lesen und wiederum in Tonsignale bzw. Musik umzusetzen; auch dies ist aus dem Stand der Technik hinlänglich bekannt).

Das MP3-Dateiformat besteht strukturell aus einem Header sowie einer Menge von Dateneinheiten (Datenpaketen, auch Frames genannt), in denen jeweils die Musikdaten komprimiert enthalten sind. Größe und Struktur der Frames sind durch die Header-Daten genauer beschrieben und somit exakt festgelegt. Konkret komprimiert jedes Frame eine Mehrzahl von Audio Access Units (AAU), wobei jedes dieser AAU für einen vorbestimmten Zeitabschnitt des Audiosignals (etwa 8 oder 12 msec) steht. Das zeitliche Audiosignal ist gem. MP3-Standard diskret FFT-transformiert, wobei die Transformation auf der Grundlage von 32 vorgegebenen Frequenzen durchgeführt ist und die Daten einer FFT-Transformation in einer AAU abgespeichert sind, wie es dem üblichen Vorgehen beim Erzeugen einer MP3-Sounddatei entspricht.

Gemäß der vorliegenden Erfindung ist jedoch eine zum Zugriff durch den Benutzer 16 bereitgestellte, vom Anbieter 14 in die Dokument-Servereinheit 20 geladene, MP3-Sounddatei verschlüsselt, und zwar mittels einer Verschlüsselungseinheit 24.

Genauer gesagt besteht die Verschlüsselung darin, dass die einzelnen Frames der MP3-Dateistruktur in einer nicht dem ursprünglichen Musiksignal entsprechenden Reihenfolge vertauscht sind, Frames entfernt wurden, zusätzliche, bedeutungslose Frames eingefügt wurden und/oder Vertauschungen von Frames von zwei oder mehr unabhängigen Tondateien vorgenommen wurden, wobei durch eine solche Verschlüsselungsmanipulation -- im weiteren auch semantische Verschlüsselung genannt --, die eigentliche Struktur des MP3-Formats, nämlich Header und diesem zugeordnete Frames, erhalten worden ist. Mit anderen Worten, die Abspieleinheit 22 (wie auch jede andere, für MP3 geeignete Player- bzw. Viewereinheit) wird die so verschlüsselte MP3-Datei öffnen und abspielen können. Durch die vorgenommenen Manipulationen ergibt jedoch das erhaltene, von MP3 in ein Audiosignal zurückgewandelte Signal aus Benutzersicht keinen Sinn, da durch die Vertauschungen, Austauschungen, Entfernungen und Hinzufügungen von Frames das ursprüngliche Soundsignal so verfremdet ist, dass das ursprüngliche Musikstück oder dergl. Inhalt der MP3-Datei für einen Benutzer nicht mehr brauchbar ist.

In erfindungsgemäß vorteilhafter Weise führt zudem der Anbieter 14 das Laden (Upload) einer in der beschriebenen Weise verschlüsselten MP3-Datei in die Dokument-Servereinheit 20 so durch, dass hier nicht nur eine verschlüsselte Fassung der MP3-Datei vorliegt, sondern eine Vielzahl, beispielsweise 1000 oder 2000, identisch oder verschieden verschlüsselter Fassungen desselben Musikstücks (wobei, wie dargelegt, für einen Benutzer 16, der die Dokument-Servereinheit 20 mit deren Inhaltsverzeichnis bzw. einer den angebotenen Dateien zugeordneten, nicht näher erläuterten Suchmaschine abfragt, der Umstand einer Verschlüsselung nicht erkennbar ist, da das Format MP3 auch für die verschlüsselten Dateien erhalten geblieben ist).

Dieser Maßnahme liegt zugrunde, dass eine Mehrzahl der im Internet etwa zum Anbieten von MP3-Musikdateien existierenden Dokument-Servereinheiten sog. Piraten-Sites sind, nämlich solche Internet-Stationen, die in von einem durch Urheberrecht oder dergl. Rechte berechtigten Anbieter nicht autorisierter Weise Musikstücke zum beliebigen, üblicherweise kostenlosen Herunterladen an beliebige Benutzer anbieten, wobei herkömmlicherweise die Verbreitung des vom Anbieter erstellten bzw. vertretenen Musikstücks von diesem dann nicht mehr kontrolliert werden kann und ihm insoweit ein beträchtlicher Schaden entsteht.

Durch die beschriebene Maßnahme im Rahmen der Erfindung wird jedoch eine solche Dokument-Servereinheit als Piraten-Site durch eine Vielzahl von -- letztendlich aus Benutzersicht ohne weiteres nicht benutzbaren -- MP3-Dateien beaufschlagt, so dass die Wahrscheinlichkeit, dass ein Benutzer eine nicht verschlüsselte (und damit problemlos benutzbare) Musikdatei lädt, eher gering ist. Bereits aufgrund dieses Umstandes steht zu erwarten, dass der Benutzer, frustriert durch das negative Ergebnis beim Öffnen der heruntergeladenen, verschlüsselten Musikdatei (deren Herunterladen bei derzeit gängigen Dateivolumina im Bereich zwischen 2 und 4 MB bei typischen Musikstücken der populären Musik) demotiviert ist und die zukünftige Benutzung dieser Dokument-Servereinheit 20 unterlässt oder bereit ist, die ihm angebotene Softwarekomponente herunterzuladen und zu installieren, mit der dann anschließend die Signaturservereinheit informiert werden kann.

Durch eine weitere Maßnahme im Rahmen der vorliegenden Erfindung wird jedoch erreicht, dass nicht nur der beschriebene Effekt die weitere Verbreitung unautorisierter Musikdateien (und natürlich auch anderer elektronischer Dokumentdateien) unterbindet oder zumindest ausdünnt, auch wird dem Benutzer 16 die Gelegenheit geboten, das von ihm von der Dokument-Servereinheit 20 heruntergeladene, verschlüsselte MP3-Dokument in eine unverschlüsselte Fassung umzuwandeln, so dass er nach im weiteren noch zu beschreibenden Schritten zu einem legalen (und aus der Sicht des Anbieters 14 potentiell umsatzträchtigen) Benutzer wird:

Der Anbieter 14, der seine MP3-Datei in der beschriebenen Weise durch die Verschlüsselungseinheit 24 verschlüsselt und auf die Dokument-Servereinheit 20 des Internets 12 geladen hat, erzeugt mit der verschlüsselten Form der Datei eine zugehörige Rekonstruktionsdatei, d. h. eine Datei, die die notwendigen Anweisungen enthält, um die vertauschten, ausgetauschten oder ersetzten Frames der MP3-Datei wieder in die Ursprungsform zurückzuversetzen: Eine derartige, individuell einer verschlüsselten MP3-Datei zugeordnete Rekonstruktionsdatei wird auf eine ebenfalls im Internet befindliche Rekonstruktions-Servereinheit 26 aufgespielt. Eine mögliche Weiterbildung dieser Realisierungsform der Erfindung liegt darin, dass statt einer Rekonstruktionsdatei eine Mehrzahl von Rekonstruktionsdateien zum Wiederherstellen eines elektronischen Dokuments erzeugt und bereitgestellt werden, wobei sich jedoch diese Mehrzahl von Rekonstruktionsdateien voneinander unterscheidet und so realisiert ist, dass lediglich eine dieser Mehrzahl von Dateien das Wiederherstellen des ursprünglichen (vollständig), korrekten Inhaltes ermöglicht, während die weiteren, parallel erzeugten Rekonstruktionsdateien bei der Verwendung zusammen mit der Rekonstruktionseinheit zu einem Ergebnis führen, welches zwar scheinbar ebenfalls der ursprünglichen, unverschlüsselten elektronischen Dokumentdatei entspricht, jedoch inhaltlich abweicht und damit auch wiederum eine gewisse Verschlüsselungswirkung erreicht (indem z.B. punktuell an bestimmten Bereichen einer MP3-Musikdatei unbrauchbare Passagen gebildet werden, während ansonsten die Datei der ursprünglichen, unverschlüsselten Fassung ist). Durch eine solche, weiterbildungsgemäß vorgesehene Mehrzahl von möglichen Rekonstruktionsdateien wird der Sicherheitseffekt der vorliegenden Erfindung um die Dimension der Unsicherheit seitens eines unberechtigt Zugreifenden ergänzt, nämlich hinsichtlich der Frage, welche der Mehrzahl von theoretisch in Frage kommenden Rekonstruktionsdateien denn nun die eigentlich richtige ist. (Deren korrekte Auswahl ist bevorzugt das Ergebnis eines ordnungsgemäß durchgeführten Identifikations- und/oder Authentifizierungsprozesses, der weiter bevorzugt mittels einer zugrundeliegenden Betriebssystemumgebung implementiert ist.)

Eine logische Verknüpfung (und damit Identifizier- und Erreichbarkeit der Rekonstruktionsdatei für eine MP3-Sounddatei) wird erreicht, indem für eine verschlüsselte MP3-Sounddatei eine sog. Signatur berechnet wird, d. h. ein mathematischer Algorithmus wird auf die verschlüsselte Datei ausgeübt, und im Ergebnis entsteht eine Signatur in Form eines Zeichenstrings oder einer Datei, die charakteristisch ist für Inhalt und Reihenfolge der Inhaltskomponenten der verschlüsselten MP3-Datei. Diese Signatur, mittels einer Signatureinheit 28 auf der Anbieterseite 14 berechnet, wird einer ebenfalls im Internet 12 befindlichen Signatur-Servereinheit 30 so aufgespielt, dass eine darin vorgesehene, benutzerseitig abzufragende Datenbankeinheit in der Art einer Konkordanztabelle eine (üblicherweise eindeutige) Verknüpfung und Beziehung zwischen einer Signatur eines verschlüsselten MP3-Dokuments und dem Namen und Fundort (z.B. Link) einer zugehörigen Rekonstruktionsdatei enthält und herstellen kann.

Benutzerseitig kann dann die lokale Zugriffseinheit 18 mittels einer dieser bevorzugt in der Art eines Einschubs (Plug-in) eingebetteten Funktionseinheit 32 Kontakt mit der Signatur-Servereinheit 30 im elektronischen Datennetz 12 aufnehmen, nachdem eine lokale Signatureinheit 35, die ebenfalls der Zugriffseinheit 18 zugeordnet ist (bzw. in diese eingebettet ist) mit dem lokal bekannten (allgemeinen) Algorithmus die für eine spezielle (verschlüsselte) und heruntergeladene MP3-Datei geltende Signatur berechnet hat.

Der benutzerseitige Netzzugriff mittels der Funktionseinheit 32 stellt dann in der beschriebenen Ausführungsform die lokal berechnete Signatur (mittels Einheit 35) der Signatur-Servereinheit 30 bereit, und mittels der dort gespeicherten Konkordanztabelle erhält der Benutzer 16 aus der Signatur-Servereinheit 30 einen Dateinamen sowie eine Zugriffsadresse (Link) für die der übermittelten Signatur zugehörige Rekonstruktionsdatei.

Mit dieser ist der Benutzer 16 dann in der Lage, aus der ihm vorliegenden verschlüsselten MP3-Datei die unverschlüsselte, also die aus Benutzersicht nutzbare, Fassung des Musikstücks durch die Abspieleinheit 22 zu erzeugen, wobei zum Zweck der Entschlüsselung benutzerseitig eine Rekonstruktionseinheit 34 vorgesehen ist, die ebenfalls als Plug-in realisiert sein kann, und die -- in der Art einer Umkehrung der Funktion der anbieterseitigen Verschlüsselungseinheit 24 -- durch Ausführen der Rekonstruktionsanweisungen gemäß erhaltener Rekonstruktionsdatei von der Rekonstruktions-Servereinheit die Verschlüsselung aufhebt.

Üblicherweise ist jedoch das Herunterladen der Rekonstruktionsdatei von der Rekonstruktions-Servereinheit 26 zum Zweck des Erzeugens einer unverschlüsselten lokalen MP3-Sounddatei an das Durchführen eines Bezahlungs- bzw. Abrechnungsvorganges gekoppelt, der Benutzer entrichtet also üblicherweise einen vorbestimmten Geldbetrag oder dergl. Gegenleistung dafür, dass er von der Rekonstruktions-Servereinheit die Möglichkeit bekommt, in der von der Signatur-Servereinheit angegebenen Weise die zu der ihm vorliegenden verschlüsselten MP3-Datei passende Entschlüsselungs- bzw. Rekonstruktionsmöglichkeit zu erhalten. Zu diesem Zweck ist -- in ansonsten bekannter Weise -- benutzerseitig eine Identifikations- bzw. Abrechnungseinheit 36 vorhanden, die, insbesondere auch als Funktionalität der Zugriffseinheit 18, einer der Rekonstruktions-Servereinheit 26 zugeordneten Abrechnungs-Identifikationseinheit 38 Benutzerdaten so zur Verfügung stellt, dass durch die Rekonstruktions-Servereinheit 26 und die zugehörige Abrechnungs-/Identifikationseinheit 38 der Benutzer identifiziert, etwa dessen Kreditkartennummer oder dergl. Zahlungsmodalitäten erfasst und eine entsprechende Zahlung verbucht werden kann oder mit einem vorhandenen Guthaben verbucht oder gegengerechnet wird.

Auf die beschriebene Weise kann somit das der Erfindung zugrunde liegende Ziel der Eindämmung einer unautorisierten Verbreitung von elektronischen Dateien wirksam erreicht werden: Nicht nur wird durch das (massive) Laden verschlüsselter und damit für Benutzer als solche nicht brauchbaren MP3-Dateien in die Dokument-Servereinheit 2D (ohne dass dies jedoch ohne konkretes Herunterladen und Abspielen erkennbar wäre) beträchtliche Verunsicherung und Frustration erzeugt, die bei mehrfachem Mißerfolg Benutzer sicherlich vom weiteren Zugriff auf die betreffende Dokument-Servereinheit (Piraten-Site) abhalten dürfte, darüber hinaus erhält jedoch der Benutzer die Möglichkeit, bevorzugt mittels eines Abrechnungsvorganges die geladene Datei zu entschlüsseln und damit wieder benutzbar zu machen.

Während das vorliegende Ausführungsbeispiel auf MP3-Musikdateien bezogen war, ist die vorliegende Erfindung nicht auf dieses Dateiformat beschränkt, sondern prinzipiell jedes elektronische Dateiformat eines elektronischen, schutzbedürftigen Dokuments, das die Möglichkeit zu einer semantischen Verschlüsselung der vorbeschriebenen Art bietet, eignet sich zur Anwendung der vorliegenden Erfindung.

Allerdings hat auf Grund des kommerziellen Potentials offenbar MP3 das besondere Problem zu erwartender, massiver Schäden durch illegale Distribution, so dass dieses Ausführungsbeispiel gewählt wurde.

Ergänzend sei zur semantischen Verschlüsselung insbesondere des MP3-Formats noch erläutert, dass durch die Tatsache, dass die Frames unabhängig voneinander sind, diese ohne weiteres vertauscht werden können. Vorteilhaft kann eine solche Änderung nicht maschinell oder algorithmisch festgestellt werden. Alternativ würde auch eine Änderung des Headers zu einer vollständigen Unlesbarkeit des MP3-Dokuments führen; jedoch besteht auf Grund mehrfacher Header-Einträge hier unter Umständen die Möglichkeit, einen veränderten Header zu identifizieren und zu berichtigen.

Zudem bietet MP3 die Möglichkeit, bei der Dekompression der Frames innerhalb derselben die AAU zu vertauschen, oder FFT-Faktoren können verändert werden, so dass eine abgespielte Tonfrequenz sich drastisch ändert. Auch böte MP3 die Möglichkeit, Audio-Dateien in dem durch die AAU festgelegten Zeitintervall auszutauschen bzw. parallel zu führen, so dass zwei oder mehr Tonsignale parallel, ggf. in derselben Datei, integriert werden. Eine entsprechende Rekonstruktionsanweisung (einer zugehörigen Rekonstruktionsdatei) könnte dann so aussehen, dass anweisungsgemäß aus einer solchen Datei nur die Daten herauszufiltern sind, die mit einem konkreten Audiosignal zu identifizieren sind.

Generell gilt jedoch, wie erläutert, das Prinzip der semantischen Verschlüsselung auch über das MP3-Format hinaus und für weitere Dokumentdatenstrukturen, wobei es sich insbesondere anbietet, die semantischen Verschlüsselungsoperationen auf einer Objektebene eines jeweiligen Dateistrukturformates durchzuführen.

Die vorliegende Erfindung bietet darüber hinaus die Möglichkeit, durch entsprechende Ausgestaltung der benutzer- bzw. zugriffsseitigen Funktionskomponenten, die Kontrolle über etwaige, illegale Dokumentdateien weiter zu erhöhen bzw. Ursprünge von illegal beschafften Dokumenten zu beschaffen: So ist es besonders bevorzugt, die Funktionseinheit 32 so auszubilden, dass diese automatisch nach dem Herunterladen einer (beliebigen) MP3-Datei einen Anwahl- bzw. Zugriffsvorgang auf die Internet-Signatur-Servereinheit 30 durchführt und dieser die lokal berechnete (Einheit 35) Signatur der jeweiligen MP3-Datei übermittelt; falls die MP3-Datei Gegenstand eines gerade erst durchgeführten Online-Kontaktes zu einer Dokument-Servereinheit 20 gewesen ist, könnte parallel mit der Übermittlung der Signatur zur Signatur-Servereinheit auch ein Pfad (Link-Angabe) übertragen werden, welche angibt, von welcher Adresse die betreffende MP3-Datei stammt.

Insbesondere das Feststellmittel für die Signatur-Servereinheit 30, dass es sich hierbei um eine unbekannte Signatur handelt, könnte dann weitere Verarbeitungsschritte auslösen, wie etwa das Weiterverfolgen einer potentiellen illegal erhaltenen (oder möglicherweise überhaupt nicht verschlüsselten) Datei.

Darüber hinaus kann die Funktionse inheit 32 so ausgebildet sein, dass sie im Rahmen der Ermittlung der Quelle der Daten auch die Namen und Adressen der Server erfasst (mittels Internet-üblicher Trace-Technologien), die für die Übertragung der Daten verwendet worden sind. Auf diese Weise kann ein Profil erzeugt werden, das dazu genutzt werden kann, diejenigen Dokumentenserver, die z.B. durch die verschlüsselten Dokumente nicht erreicht werden konnten, die aber durch die Statistiken am Signaturserver als besonders gefährliche und umfassende Piraten-Sites erkannt worden sind, genauer zu untersuchen. Die auf diese Weise gefundenen Informationen können dann zur Beweisführung verwendet und bei der Abschaltung des Service bei den Content-Providern oder bei der gezielten Ausfilterung der auf diese Sites gerichteten Anfragen bei den Netzprovidern genutzt werden.

Während, wie in der Figur 1 gezeigt, Signatur-Servereinheit 30 und Rekonstruktions-Servereinheit 26 im Internet prinzipiell (räumlich) getrennte Einheiten sind, wobei insbesondere auch vorgesehen ist, dass eine (zentrale) Signatur-Servereinheit Hinweise zu einer Mehrzahl verschiedener Rekonstruktions-Servereinheiten geben kann, ist es insbesondere auch möglich, dass ein Anbieter in sich Signatur-Servereinheit und Rekonstruktions-Servereinheit integriert, insoweit also bereits die Signatur-Servereinheit bei Erhalten einer entsprechenden Benutzeranfrage gleich eine passende, zugehörige Konstruktionsdatei (ggf. nach erfolgter finanzieller Transaktion) dem Benutzer übersenden kann.

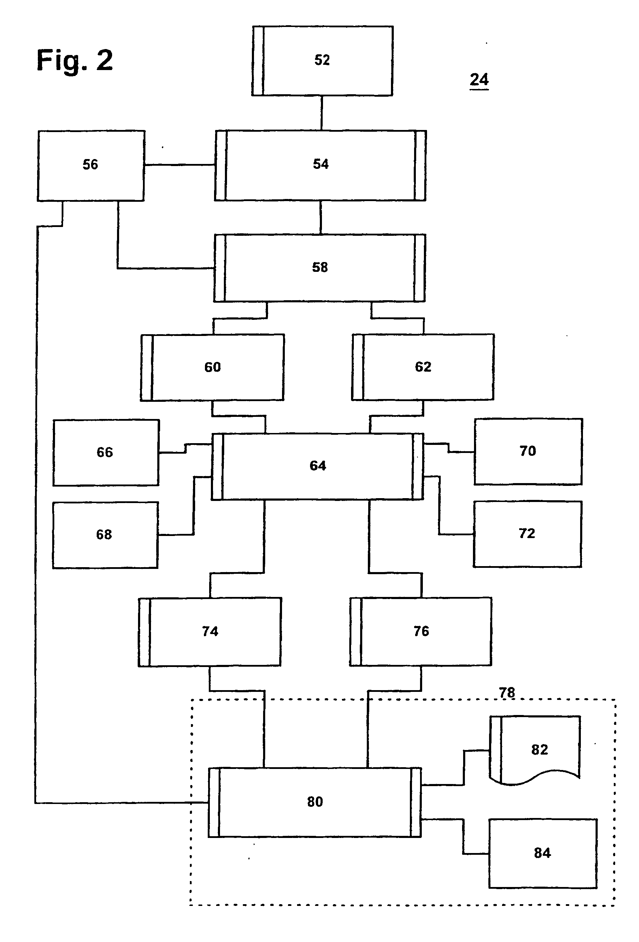

Unter Bezug auf die Fig. 2 wird nachfolgend eine praktische Realisierungsform des die Infrastruktur zur semantischen Verschlüsselung be-treffenden Aspekts der vorliegenden Erfindung beschrieben.

Die Fig. 2 zeigt dabei in einer schematischen Blockschaltbild-Darstellung den Aufbau einer Schlüsselerzeugungs- und Verwaltungseinheit mit den zugehörigen Funktionskomponenten im Rahmen der vorliegenden Erfindung, die benutzt werden kann, um durch die erfindungsgemäße Technologie der semantischen Verschlüsselung zu schützende elektronische Dokumente in geschützte Volumendateien und zugehörige Schlüsseldateien umzusetzen. Dabei ermöglicht es die im Zusammenhang mit Fig. 2 beschriebene Ausführungsform insbesondere auch, nicht lediglich eine (beim Wiederherstellen zur ursprünglichen, korrekten Datenmenge führende) Schlüsseldatenmenge zu erzeugen, sondern eine Mehrzahl von Schlüsseldatenmengen, so dass auch durch diesen Aspekt des Vorliegens einer Mehrzahl möglicher Schlüssel (von denen auch wiederum einer zu dem auch inhaltlich korrekten, und nicht nur scheinbar korrekten Ergebnis führt) die Sicherheit der vorliegenden Erfindung weiter erhöht werden kann.

Die Fig. 2 soll am Beispiel eines elektronischen Textdokuments beschrieben werden, welches in einem üblichen Format (z.B. Microsoft WORD) vorliegt und mit geeigneten Texteditoren erstellt wurde. Das Textdokument besteht aus dem Satz
Peter geht um 20.00 Uhr zum Bahnhof. Der Zug ist pünktlich.
ist in einer Speicherheit 52 gemäß Fig. 2 gespeichert und soll in nachfolgend zu beschreibender Weise durch Wirkung der in Fig. 2 gezeigten, weiteren Funktionskomponenten semantisch verschlüsselt werden.

Eine der Dokumentspeichereinheit 52 nachgeschaltete Lese/Zugriffseinheit 54, welche mit einer Formatdateneinheit 56 zusammenwirkt, stellt fest, dass das obige, in der Speichereinheit 52 gespeicherte Dokument der Formatstruktur MS-WORD folgt (idealerweise enthält die Formatdateneinheit 56 sämtliche Format- bzw. Strukturinformationen gängiger Datenformate), und greift mit diesen (dateibezogenen) Formatinformationen auf das Textdokument in der Dokumentspeichereinheit 52 zu. Die der Lese-/Zugriffseinheit 54 nachgeschaltete Analyseeinheit 58 ist nunmehr in der Lage, auf der Basis der von der Leseeinheit 54 gelesenen Dokumentinformationen diese zu analysieren und zu bewerten, wobei die Analyseeinheit 58 zum einen das elektronische Dokument in seine einzelnen Informationskomponenten zerlegt und diese in eine Informationskomponentenspeichereinheit 60 ablegt (im vorliegenden Beispiel wären dies die einzelnen Wörter), und zusätzlich die Dokumentstruktur als Struktur von zwei durch Punkte begrenzten Sätzen erkennt und diese Dokumentstruktur in der Dokumentstrukturspeichereinheit 62 zerlegt ablegt. Insoweit erhält der Inhalt der Einheit 62 den Charakter einer dokumentspezifischen Metadatei, auf die auch spätere Verschlüsselungsvorgänge (auch ggf. nur selektiv) zugreifen können.

Konkret könnte der Inhalt der Dokumentstrukturspeichereinheit nach der Analyse des Ausgangsdokuments durch die Analyseeinheit wie folgt aussehen:
Satz 1 (1, 2, 3, 4) Satz 2 (1, 2, 3),
während die Informationskomponentenspeichereinheit 60 dieser strukturellen Analyse entsprechenden Informationskomponenten, also Worte enthält:
(1.1) Peter
(1.2) geht
(1.3) um 20.00 Uhr
(1.4) zum Bahnhof
(2.1) der Zug
(2.2) ist
(2.3) pünktlich

Mit dieser für das nachfolgende Vornehmen der Verschlüsselungsoperationen wichtigen Vorbereitung ist es nunmehr möglich, sowohl auf die einzelnen Informationskomponenten (im vorliegenden Beispiel die einzelnen Worte), als auch auf die Folgen von Informationskomponenten bzw. Strukturen die Basisoperationen der semantischen Verschlüsselung durchzuführen, nämlich das Vertauschen, Entfernen, Hinzufügen oder Austauschen. Dabei liegt eine wesentliche Schutzwirkung der erfindungsgemäßen semantischen Verschlüsselung darin, dass diese Operationen nicht beliebig durchgeführt werden, sondern dass dies vielmehr unter Beibehaltung der grammatikalischen, syntaktischen und/oder formatmäßigen Regeln erfolgt, so dass auch als Ergebnis der Verschlüsselung ein Resultat entsteht, welches scheinbar (d.h. ohne inhaltliche Prüfung) korrekt zu sein scheint, mit anderen Worten, dem man nicht ansieht, dass es sich in der Tat um ein verschlüsseltes Ergebnis handelt.

Im vorliegenden Ausführungsbeispiel wird mit Hilfe der Verschlüsselungseinheit aus dem oben angegebenen elektronischen Dokument der folgende Text:
Thomas kommt um 16.00 Uhr vom Friedhof. Der Zug ist pünktlich.

Ohne Kenntnis des wahren Inhaltes erscheint dieser Satz also wie ein offenes, unverschlüsseltes Ergebnis, so dass eine wesentliche, schutzbegründende Wirkung der vorliegenden Erfindung bereits darin liegt, dass ein Angreifer angesichts dieses Textes möglicherweise gar nicht erst den Eindruck gewinnt, es handle sich um eine Verschlüsselung, und so von Anfang an einen Angriff auf diesen Text unterläßt.

Konkret wurde im vorliegenden Ausführungsbeispiel durch Wirkung einer Äquivalenzeinheit 70 (die in ihrer einfachsten Fassung als Tabelle bzw. Datenbank von äquivalenten, d.h. entsprechenden und austauschbaren, Begriffen verstanden werden kann, folgendes vorgenommen: Die Inhaltskomponente "Peter" des Ausgangsdokuments wurde durch die grammatikalisch äquivalente Inhaltskomponente "Thomas" ersetzt, wobei Satzstruktur und Grammatik beibehalten wurden, der Sinn des Ursprungsdokuments jedoch bereits zerstört ist. Entsprechend wurde die Inhaltskomponenten "geht" des Ursprungsdokuments in die äquivalente Komponente "kommt" ersetzt, die Inhaltskomponente "um 20.00 Uhr" wurde ersetzt durch "um 16.00 Uhr" (hier wurde durch Wirkung der Äquivalenzeinheit festgestellt, dass es sich um ein numerisches Datum in Form einer Uhrzeit handelt, so dass eine Manipulation innerhalb der zulässigen Uhrzeiten möglich war), und die Inhaltskomponente "zum Bahnhof" wurde ersetzt durch die Inhaltskomponente "vom Friedhof". Dabei wurde zudem durch eine ebenfalls mit der Manipulationseinheit 64 verbundene, den geschilderten Verschlüsselungsbetrieb beeinflussende semantische Regeleinheit 72 sichergestellt, dass das Verschlüsselungsergebnis "...kommt ... vom Friedhof" grammatikalisch und syntaktisch korrekt ist, insoweit also nicht als manipuliert identifiziert werden kann. (Auch das zusätzliche "zum" wäre hier korrekt). Auch wurde mittels der Manipulationseinheit 64 und der zusammenwirkenden Äquivalenzeinheit 70 bzw. semantischen Regeleinheit 72 festgestellt, dass die Inhaltskomponente "der Zug" des nachfolgenden Satzes in einem inhaltlichen Bezug zu der in den vorhergehenden Satz neu eingebrachten Inhaltskomponente "Friedhof" steht, so dass selbst ohne eine Verschlüsselung des zweiten Satzes ein völlig anderer Sinn (und damit ein Verschlüsselungseffekt) entsteht.

Als Ergebnis dieser beschriebenen, einfachen Verschlüsselungsoperationen wird somit das Verschlüsselungsergebnis
"Thomas kommt um 16.00 Uhr vom Friedhof. Der Zug ist pünktlich."
als Volumendaten ausgegeben und in einer Volumendaten-Speichereinheit abgelegt, während ein das Rekonstruieren ermöglichender Schlüssel (im vorliegenden Ausführungsbeispiel eine Information über die jeweils vertauschten Worte mit deren Position im Satz sowie in jeweiligen inhaltlichen Begriffen) in einer Schlüsseldaten-Speichereinheit 74 abgelegt wird. Entsprechend könnte die zugehörige Schlüsseldatei für die Speichereinheit 74 wie folgt aussehen (im folgenden Beispiel wird von der Rekonstruktionseinheit der Befehl EXCHANGE interpretiert, um die im Argument angegebene Vertauschung durchzuführen):
EXCHANGE (1.1; Thomas)
EXCHANGE (1.2; kommt)
usw.

In einer Weiterbildung dieser Ausführungsform ist das Vokabular der Befehlssprache selbst dynamisch und kann durch Funktionen einer Scriptsprache geändert werden; der Befehl EXCHANGE würde so selbst durch einen anderen, beliebigen Ausdruck ersetzt werden können.

Gemäß einer weiteren bevorzugten Ausführungsform der Erfindung ist vorgesehen, eine Mehrzahl von Schlüsseldateien zu erzeugen, von denen jedoch nur eine das korrekte Rekonstruktionsergebnis erzeugt. Schlüsseldatei 2 könnte entsprechend wie folgt beginnen:
EXCHANGE (1.1; Rüdiger)
(Rest wie obige Schlüsseldatei);

Schlüsseldatei beginnt mit:
EXCHANGE (1.1; Claus)
usw.

Im Ausführungsbeispiel der Fig. 2 ist zusätzlich diesen beiden Speichereinheiten eine Ausgabeeinheit 78 nachgeschaltet, die in besonders einfacher Weise die Schlüsseldaten 74 in Form eines Scripts aufbereitet und als lauffähige Scriptdatei 84 ausgeben kann; dies geschieht mit Hilfe einer Konvertierungseinheit 80, welche in ansonsten bekannter Weise aus den Volumendaten der Speichereinheit 76 ein der verschlüsselten Fassung entsprechendes Volumendokument 82 erzeugt, und aus den Index- bzw. Rekonstruktionsdaten der Speichereinheit 74 ein selbständig im Rahmen einer geeigneten Ablaufumgebung lauffähige(s) Strukturbeschreibung, Script, z.B. als Javascript, XML, VB-Script dgl. od., und welches dann selbständig beim Ablaufen das Volumendokument 82 bearbeitet und in die ursprüngliche, unverschlüsselte Form zurückführen kann.

Entsprechend kann die Datei 84 als Rekonstruktionsdatei in der Rekonstruktions-Datenspeichereinheit 26 (Fig. 1) abgelegt werden, die Datei 82 im Dokumentserver 20.

Zusätzlich ist die in Fig. 2 schematisch gezeigte Ausführungsform geeignet, nicht nur eine Schlüsseldatei für die Speichereinheit 74 (bzw. als lauffähige Scriptdatei 84) zu erzeugen, sondern eine Mehrzahl von diesen, von denen idealerweise jedoch wiederum nur eine zu einem inhaltlich tatsächlich korrekten Ergebnis führt, während andere Schlüsseldateien als Scripte einen Entschlüsselungsvorgang auslösen, welcher zwar ebenfalls zu einem sinnvollen (und damit scheinbar korrekten) Ergebnis führt, inhaltlich jedoch nicht mit der Ursprungsfassung übereinstimmt. Hierdurch ist dann eine weitere Erhöhung der Verschlüsselungssicherheit gegeben. Dabei sollte es unmittelbar einsichtig sein, dass bereits geringe inhaltliche Abweichungen den (für einen Nutzer eigentlich wertbildenden) Sinn des Ursprungsdokuments vollständig zerstören, so dass es möglicherweise nur geringer Modifikationen bzw. einer geringen Anzahl von Verschlüsselungsoperationen (mit der Folge einer entsprechend kurzen Scriptdatei als Schlüsseldaten) bedarf, um den vorgesehenen Schutzzweck zu erreichen, bis hin zur bereits erwähnten Nicht-Verschlüsselung der Ursprungsdatei, die ihren Schutzzweck lediglich aus dem Umstand herleitet, dass ein unberechtigt Zugreifender die Unsicherheit hat, ob er es mit einem offenen (d.h. der Ursprungsdatei auch entsprechenden) Inhalt, oder aber mit einem verschlüsselten, d.h. nicht mit der Ursprungsdatei übereinstimmenden Inhalt zu tun hat.

Außerdem kann der Manipulationseinheit eine Zufallssteuerungseinheit (68) zugeordnet werden, die das Vertauschen, Entfernen, Hinzufügen und/oder Austauschen durch die Manipulationseinheit. betreffend einzelner Informationskomponenten und/oder Folge(n) von Informationskomponenten zufallsabhängig, insbesondere nicht reproduzierbar, steuert. Ferner kann die Manipulationseinheit eine Verschlüsselungsparametereinheit (66) zugeordnet werden, die zum Speichern und/oder Einstellen vorbestimmter Parameter für das Vertauschen, Entfernen, Hinzufügen und/oder Austauschen durch die Manipulationseinheit ausgebildet ist, insbesondere betreffend eine durch eine Anzahl des Vertauschens, Entfernens, Hinzufügens und/oder Austauschens erreichte Verschlüsselungstiefe.

Die vorliegende Erfindung ist, wie erwähnt, nicht auf das exemplarische Beispiel von Textdateien beschränkt. So bietet es sich insbesondere auch an, jegliche weiteren elektronischen Dokumente durch die prinzipiell beschriebene Weise zu verschlüsseln, solange diese elektronischen Dokumente eine für die Basisoperationen des Vertauschens, Entfernens, Hinzufügens oder Austauschens geeignete Struktur aus Inhaltskomponenten aufweisen. Typische Anwendungsfälle sind insbesondere Musikdateien, die üblicherweise im MP3-Format vorliegen, und wo es im Rahmen der vorliegenden Erfindung möglich ist, die durch das MP3-Format vorgegebenen Datenstrukturen (sog. Frames) einzeln oder blockweise (idealerweise auch takt- oder abschnittsweise, bezogen auf das jeweilige Musikstück) auszutauschen, zu entfernen oder zu vertauschen. Entsprechendes gilt für Bild- und/oder Videodateien, denn auch die dort gängigen, bekannten Dokumentformate basieren auf einer Folge von Frames als Inhaltskomponenten (bei Bildern oder elektronischen Videos sind dies die jeweiligen Einzelbilder), die in der erfindungsgemäßen Weise manipuliert werden können.

Weitere mögliche und günstige Weiterbildungen der Erfindung sehen vor, dass eine Rekonstruktionsdatei, insbesondere in Form eines Scripts od.dgl., in einem ASCII- und/oder HTML-Dateiformat vorliegt. Insbesondere im Hinblick auf eine Client- und/oder Servereinheit schützende Firewall bieten sich damit vereinfachte Möglichkeiten, eine solche Firewall unbehelligt zu durchdringen.

Eine weitere, vorteilhafte Weiterbildung der Erfindung sieht vor, eine Rekonstruktionsdatei geeignet in elektronische Dokumentdaten (desselben oder eines anderen Dateityps) einzubetten, und zwar so, dass damit Format und (wiedergegebener) Inhalt einer solchen Gastdatei unverändert bleibt; in besonders vorteilhafter weise bietet sich für eine solche, verdeckte Weitergabe von Rekonstruktionsdateien, mit dem Zweck einer weiteren Sicherheitserhöhung, daher ein Bereich der Gastdatei an, welcher nicht unmittelbar inhaltswirksam ist, also z.B. Kommentar- oder Informationsbereiche usw.

Insbesondere die Realisisierungsmöglichkeit der erfindungsgemäßen Rekonstruktionsdateien als Scripte bieten zahlreiche Möglichkeiten einer Weiterbildung: So ermöglicht das scriptgesteuerte Zusammenführen im Rahmen der vorliegenden Erfindung als Weiterbildung das Flexibilisieren bzw. weitere Erhöhen der Sicherheit dadurch, dass nicht allein eine Scriptdatei als Rekonstruktionsdatei das Wiederherstellen der unverschlüsselten Form des elektronischen Dokuments durch das Zusammenführen ermöglicht, sondern eine Mehrzahl von Scripten als Rekonstruktionsdateien notwendig ist, welche z.B. vorbestimmte zeitliche Abschnitte des elektronischen Dokuments abdecken und sich dann sukzessive aufrufen. Als Beispiel könnte hier die Erfindung so realisiert werden, dass jeweils eine Scriptdatei als Rekonstruktionsdatei für einen Zeitabschnitt von etwa 30 Sekunden eines MP3-Musikstücks das Rekonstruieren ermöglicht, und dann eine weitere Rekonstruktion das (wiederum scriptgesteuerte) Aufrufen einer nachfolgenden, weiteren Scriptdatei zur Rekonstruktion notwendig macht. Neben einer gesteigerten Sicherheitswirkung ergeben sich hiermit Möglichkeiten einer kontextabhängigen Generierung bzw. Rekonstruktion des ursprünglichen Originaldokuments, einschließlich gar der Möglichkeit, verschiedene Varianten des Originaldokuments kontextabhängig und gezielt wieder herzustellen.

Im Ergebnis erreicht somit die Erfindung, dass faktisch ein Ordnungssystem für über ein elektronisches Datennetz verteilte elektronische Dokumente geschaffen wird, welches die Interessen der berechtigten Anbieter der Dokumente deutlich besser berücksichtigt, als dies bei der herkömmlichen, unkontrollierten und unkontrollierbaren Verbreitung von Dateien der Fall ist. So bietet sich insbesondere auch ein Einsetzen der Erfindung mit gängigen, ansonsten bekannten Identifikations- und Authentifizierungsverfahren an. Besonders relevant ist die vorliegende Erfindung für Musikstücke, denn die Musikindustrie sieht in der freien, unkontrollierten Verteilung von MP3-Daten über das Internet eine existentielle Bedrohung für ihr geschäftliches Überleben. Die von der Musikindustrie favorisierten neuen Musikformate haben hingegen außer hinzugefügter Sicherheitstechnik und Zugriffstechnik keine zusätzlichen Vorteile für den Benutzer. Der größte Nachteil besteht vielmehr darin, dass die so geschützten Dateien leicht erkennbar sind und im direkten Vergleich zu MP3-Dateien Nachteile in der Handhabbarkeit (Usability) aufweisen, so dass bei der Entscheidung des Benutzers, welche Datei heruntergeladen wird, die geschützten Dateidaten gemieden werden dürften. Diese Entscheidung des Benutzers wird dadurch begünstigt, dass es für den Benutzer klar und vor dem Download erkannt werden kann, was eine ungeschützte Datei und was eine geschützte Datei ist.

Die Aufgabe der Erfindung wie dargelegt liegt nicht in der vollständigen Unterdrückung einer illegalen Benutzung urheberrechtlich geschützter Daten. Vielmehr besteht die Intention der Erfindung darin, die Subjektive Einstellung der Benutzer so zu ändern, dass die Verwendung von einfach herunterzuladenden Daten grundsätzlich zweifelhaft wird und eine Benutzung von Daten unklaren Ursprungs damit stets mit Unsicherheit behaftet bleibt.

## Patentansprüche

1. System zum kopiergeschützten Verteilen elektronischer Dokumente mit
- einer Dokumenten-Servereinheit (20), die zum Ermöglichen eines Ladezugriffs auf ein auszuwählendes einer Mehrzahl von von der Dokumenten-Servereinheit (20) angebotenen Dokumente ausgebildet ist,
- einer einem Benutzer zugeordneten Zugriffseinheit (18), die zum Durchführen des Ladezugriffs und zum Öffnen des geladenen elektronischen Dokuments mittels einer Wiedergabeeinheit (22) ausgebildet ist,
wobei das elektronische Dokument eine Dokumentdatenstruktur aufweist, die Dokumentdaten enthält,
**dadurch gekennzeichnet, dass**
- einem Dokumentanbieter (14) eine elektronische Verschlüsselungseinheit (24) zum Erzeugen einer verschlüsselten Form (82) eines elektronischen Dokuments sowie zum Erzeugen einer zugehörigen Rekonstruktionsdatei (84) zugeordnet ist, wobei das verschlüsselte Dokument (82) in der verschlüsselten Form vollständig ablauffähig, jedoch für den Benutzer (16) nicht in der vorgesehenen Weise brauchbar ist und das Vorliegen einer Verschlüsselung des verschlüsselten Dokuments maschinell aus der Dokumentdatenstruktur ohne inhaltliche Überprüfung des Dokuments nicht erkennbar ist, und wobei die in der Rekonstruktionsdatei (84) enthaltenen Informationen dazu geeignet sind, in Verbindung mit dem verschlüsselten Dokument aus diesem das originale Dokument wiederherzustellen,
- dem Dokumentdatenanbieter (14) eine elektronische Signatureinheit (28) zum Erzeugen einer Signatur eines verschlüsselten Dokuments (82) zugeordnet ist, mit dem Ziel das Zuordnen einer Rekonstruktionsdatei (84) zu einer zugehörigen verschlüsselten Form des elektronischen Dokuments zu ermöglichen,
- eine Rekonstruktions-Datenspeichereinheit (26)-zugeordnet ist, die zum Speichern einer Mehrzahl von Rekonstruktionsdateien ausgebildet ist und die einen Ladezugriff der Zugriffseinheit (18) des Benutzers auf eine ausgewählte Rekonstruktionsdatei (84) ermöglicht,
- und eine elektronischen Zuordnungseinheit (30) zugeordnet ist, in die Informationen zur Verbindungs- oder Verknüpfungsherstellung zu einer auszuwählenden Rekonstruktionsdatei (84) eingetragen sind, die von der Zugriffseinheit (18) des Benutzers abgefragt und geliefert werden können,
- wobei eine benutzerseitige Signatureinheit (35) Vorgesehen ist, die eine einem verschlüsselten Dokument zugeordneten Signatur erzeugt, mit der auf die in der elektronischen Zuordnungseinheit (30) enthaltenen Informationen zur Verbindungs- oder Verknüpfungsherstellung zugegriffen werden kann,
und wobei die Zugriffseinheit (18) zum Zusammenwirken mit einer benutzerseitigen Rekonstruktionseinheit (34) so ausgebildet ist, dass diese ein Zusammenführen einer geladenen, verschlüsselten Form (82) eines elektronischen Dokuments mit einer zugehörigen, von der Rekonstruktions-Datenspeichereinheit (26) geladenen Rekonstruktionsdatei (84) ermöglicht, so dass ein elektronisches Dokument in für den Benutzer brauchbarer, unverschlüsselter Form erzeugt wird.

2. System nach Anspruch 1, **dadurch gekennzeichnet, dass** die elektronische Verschlüsselungseinheit (24) so ausgebildet ist, dass zum Verschlüsseln eines elektronischen Dokuments auf Datenpakete der Dokumentdatenstruktur die Operationen ausgeführt werden können: Vertauschen, Entfernen eines Datenpakets, Hinzufügen eines Datenpakets an eine vorbestimmte Position in einer Folge von Datenpaketen oder Austauschen eines Datenpakets gegen ein vorzugsweise im ursprünglichen elektronischen Dokument nicht enthaltenes Datenpaket, mittels eines Rechnerzugriffs auf jeweilige, den Datenpaketen der Dokumentdatenstruktur zugeordneten elektronischen Speicherbereiche der elektronischen Verschlüsselungseinheit.

3. System nach Anspruch 2, **dadurch gekennzeichnet, dass** die elektronische Verschlüsselungseinheit (24) zum Erzeugen der Rekonstruktionsdatei mit Angaben über die vertauschten, entfernten, hinzugefügten oder ausgetauschten Datenpakete ausgebildet ist.

4. System nach Anspruch 2 oder 3, **dadurch gekennzeichnet, dass** die Verschlüsselungseinheit (24) aufweist:
- eine Analyseeinheit (54, 56), die zum Zugreifen auf eine ursprüngliche Datenmenge des elektronischen Dokuments sowie zum elektronischen Erfassen von mindestens einer Folge von Informationskomponenten der ursprünglichen Datenmenge als Reaktion auf vorbestimmte oder ermittelte Format- oder Strukturdaten der ursprünglichen Datenmenge ausgebildet ist,
- eine der Analyseeinheit nachgeschaltete Manipulationseinheit (64), die ausgebildet ist zum
- Vertauschen oder Entfernen einer Informationskomponente in der ursprünglichen Datenmenge oder Hinzufügen einer Informationskomponente an eine vorbestimmte Position in der Folge von Informationskomponenten oder Austauschen einer Informationskomponente gegen eine bevorzugt in der ursprünglichen Datenmenge nicht enthaltene Informationskomponente sowie zum
- Erzeugen einer Schlüsseldatenmenge (74) als Rekonstruktionsdaten mit Angaben über die vertauschten, entfernten, hinzugefügten oder ausgetauschten Informationskomponenten, die so gebildet ist, dass sie ein Wiederherstellen der ursprünglichen Datenmenge aus der verschlüsselten Daten gestattet.

5. System nach Anspruch 4, **dadurch gekennzeichnet, dass** der Manipulationseinheit (64) eine Äquivalenzeinheit (70) zugeordnet ist, die für mindestens eine Informationskomponente in der ursprünglichen Datenmenge mindestens eine Äquivalenzinformationskomponente elektronisch gespeichert bereithält, wobei die Äquivalenzinformationskomponente so gebildet ist, dass sie mit der zugehörigen Informationskomponente grammatikalisch, formatmäßig oder syntaktisch übereinstimmt.

6. System nach Anspruch 4 oder 5, **dadurch gekennzeichnet, dass** die Manipulationseinheit (64) zum Zusammenwirken mit einer semantischen Regeleinheit (72) ausgebildet ist, die so eingerichtet ist, dass das Vertauschen, Entfernen, Hinzufügen oder Austauschen innerhalb der/des Grammatik, Formats oder Syntax erfolgt, die/das durch die Format- oder Strukturdaten bestimmt ist.

7. System nach einem der Ansprüche 4 bis 6, **dadurch gekennzeichnet, dass** der Manipulationseinheit (64) eine Zufallssteuerungseinheit (68) zugeordnet ist, die das Vertauschen, Entfernen, Hinzufügen oder Austauschen durch die Manipulationseinheit betreffend einzelne Informationskomponenten oder Folge(n) von Informationskomponenten zufallsabhängig steuert.

8. System nach einem der Ansprüche 4 bis 7, **gekennzeichnet durch** eine der Manipulationseinheit (64) zugeordnete Verschlüsselungsparametereinheit (66), die zum Speichern oder Einstellen vorbestimmter Parameter für das Vertauschen, Entfernen, Hinzufügen oder Austauschen **durch** die Manipulationseinheit ausgebildet ist, **durch** die eine **durch** eine Anzahl des Vertauschens, Entfernens, Hinzufügens oder Austauschens erreichte Verschlüsselungstiefe festgelegt werden kann.

9. System nach einem der Ansprüche 4 bis 8, **gekennzeichnet durch** eine der Manipulationseinheit (64) nachgeschaltete Konvertierungseinheit (80), die zum Erzeugen einer elektronisch übertragbaren Volumendatei (82) aus der verschlüsselten Datenmenge (76) als verschlüsselte Form des elektronischen Dokuments sowie einer ablauffähigen Programm- oder Scriptdatei (84) aus der Schlüsseldatenmenge (74) als Rekonstruktionsdatei ausgebildet ist.

10. System nach einem der Ansprüche 2 bis 9, **dadurch gekennzeichnet, dass** die Manipulationseinheit (64) zum Erzeugen einer Mehrzahl von Schlüsseldatenmengen (74) als Rekonsstruktionsdaten ausgebildet ist, von denen mindestens eine bei einem Zusammenführen mit der verschlüsselten Form des Dokuments nicht das Wiederherstellen der ursprünglichen Datenmenge gestattet, jedoch nach dem Zusammenführen zu einer Datenmenge führt, die mit der ursprünglichen Datenmenge syntaktisch, formatmäßig oder grammatikalisch übereinstimmt.

11. System nach einem der Ansprüche 1 bis 10, **dadurch gekennzeichnet, dass** die Rekonstruktionseinheit (34) oder die Wiedergabeeinheit (22) mindestens eine programmtechnisch durch Elemente einer Rekonstruktionsdatei beeinflussbare Manipulationseinheit aufweist, die zum Durchführen eines für das Zusammenführen der verschlüsselten Form des elektronischen Dokuments mit der zugehörigen Rekonstruktionsdatei zum Erzeugen des elektronischen Dokuments in der brauchbaren Form bzw. deren Öffnen notwendigen Betriebsvorgangs so konfigurier- und beeinflussbar ist, dass das Zusammenführen bzw. Öffnen nur bei einer vorbestimmten Konfiguration der Manipulationseinheit zum brauchbaren, unverschlüsselten elektronischen Dokument führt, wobei die Manipulationseinheit als Programmbibliothek innerhalb der Rekonstruktions- oder Wiedergabeeinheit, oder als eine auf einer Betriebssystemplattform der Zugriffseinheit ausführbare Datei, als Befehlszeile, oder als Element einer die Rekonstruktionseinheit oder Wiedergabeeinheit steuernden Programmier- oder Scriptsprache realisiert ist.

12. System nach einem der Ansprüche 1 bis 11, **dadurch gekennzeichnet, dass** die elektronische Zuordnungseinheit (30) ein mit einem elektronischen Datennetz verbundener Datenbankserver ist, der mit der RekonstruktionsDatenspeichereinheit (26) eine gemeinsame Servereinheit bildet, oder der von der Rekonstruktions-Datenspeichereinheit (26) räumlich getrennt ist und mit Informationen aus der elektronischen Zuordnungseinheit (30) die Verbindungs- oder Verknüpfungsherstellung für eine Mehrzahl von verschiedenen Rekonstruktions-Servereinheiten (26) ermöglicht.

13. System nach einem der Ansprüche 1 bis 12, **gekennzeichnet durch** eine der Rekonstruktions-Datenspeichereinheit zugeordnete Benutzeridentifikations- oder Abrechnungseinheit (38), die zum Erfassen von einen Benutzer individualisierenden Daten, zum Durchführen einer finanziellen Transaktion mit dem Benutzer oder zum Zuordnen oder Verwalten von benutzer- oder benutzergruppenspezifischen Zugriffsrechten ausgebildet ist.

14. System nach einem der Ansprüche 1 bis 13, **dadurch gekennzeichnet, dass** die benutzerseitige sowie die elektronische Signatureinheit (35, 28) zum Durchführen einer auf einem den Signatureinheiten gemeinsamen Algorithmus basierenden Leseoperation algorithmisch bestimmter Datenpositionen des verschlüsselten Dokuments (82) zum Erzeugen der zugehörigen Signatur ausgebildet ist.

15. System nach einem der Ansprüche 1 bis 14, **dadurch gekennzeichnet, dass** das elektronische Dokument eine Audio-, Video-, Animations-, Simulations-, Multimedia oder Programmdatei ist oder dass die Dokumentdatenstruktur aus der Gruppe ausgewählt ist, die die Datenformate MP3, MPEG, XML aufweist.

16. System nach einem der Ansprüche 1 bis 15, **dadurch gekennzeichnet, dass** die Zugriffseinheit (18) oder die Wiedergabeeinheit (22) mittels einer in diese eingebetteten Funktionseinheit (32) zum Durchführen eines automatischen Zugriffs auf die Zuordnungseinheit (30) nach einem Ladezugriff auf ein elektronisches Dokument (82) aus der Dokumenten-Servereinheit (20) ausgebildet ist, wobei die Funktionseinheit (32) zum Übertragen einer einem Dokument zugeordneten Link- bzw. Pfadangabe betreffend dessen Quelle von der Zuordnungseinheit (30) zur Funktionseinheit (32) ausgebildet ist.

17. System nach einem der Ansprüche 1 bis 16, **dadurch gekennzeichnet, dass** die Zuordnungseinheit (30) Mittel zum Erfassen von Benutzerzugriffen mit einer nicht einer Rekonstruktionsdatei (84) zuordbaron oder nicht in der Zuordnungseinheit (30) existierenden Signatur aufweist.

18. System nach einem der Ansprüche 1 bis 17, **dadurch gekennzeichnet, dass** die benutzerseitige Rekonstruktionseinheit (34) Mittel zum Erzeugen eines individualisierenden Kennzeichens oder eines elektronischen Wasserzeichens in dem erzeugten unverschlüsselten Dokument aufweist, wobei die individualisierende Kennzeichnung mit der Markierung des entsprechenden verschlüsselten Dokuments korrespondiert.

19. System nach einem der Ansprüche 1 bis 18, **dadurch gekennzeichnet, dass** die lokale Rekonstruktionseinheit (34) Mittel zum Ermöglichen oder Verhindern eines lokalen Abspeicherns eines unverschlüsselten Dokuments aufweist, in Abhängigkeit von durch die Rekonstruktions-Servereinheit (26) erhaltenen Steuerdaten.

20. Verfahren zum kopiergeschützten Verteilen elektronischer Dokumente, **gekennzeichnet durch** die Schritte:
- Erzeugen (24) einer verschlüsselten Form (82) eines elektronischen Dokuments sowie einer zugehörigen Rekonstruktionsdatei (84) **durch** einen Dokumentanbieter (14), wobei das verschlüsselte Dokument (82) in der verschlüsselten Form vollständig ablauffähig, jedoch für den Benutzer nicht in der vorgesehenen Weise brauchbar ist und das Vorliegen einer Verschlüsselung des verschlüsselten Dokuments (82) maschinell aus der Dokumentdatenstruktur ohne inhaltliche Überprüfung des Dokuments nicht erkennbar ist, und wobei die in der Rekonstruktionsdatei (84) enthaltenen Informationen dazu geeignet sind, in Verbindung mit dem verschlüsselten Dokument aus diesem das originale Dokument wieder herzustellen,
- Ablegen des verschlüsselten Dokuments (82) **durch** den Dokumentanbieter (14) in einer öffentlich erreichbaren Dokument-Servereinheit (20),
- Ablegen der Rekonstruktionsdatei (84) **durch** den Dokumentanbieter (14) in einer öffentlich erreichbaren Rekonstruktions-Servereinheit (26),
- Erzeugen (28) einer Signatur des verschlüsselten elektronischen Dokuments (82) **durch** den Dokumentanbieter (14) mit dem Ziel, das Zuordnen einer Rekonstruktionsdatei (84) zu einer zugehörigen verschlüsselten Form (82) des elektronischen Dokuments zu ermöglichen,
wobei die Mittel zur Erzeugung der Signatur (35) aus dem verschlüsselten Dokument benutzerseitig zugänglich sind,
- Eintragen der Signatur und Eintragen von Informationen zur Verbindungs- oder Verknüpfungsherstellung, die auf eine zur Signatur gehörige Rekonstruktionsdatei (84) verweisen **durch** den Dokumentanbieter in eine öffentlich abfragbare Datenbank (30), wobei die Datenbank auf Übermittlung einer einem verschlüsselten Dokument zugehörigen Signatur **durch** einen Benutzer diesem die zugehörige Informationen zur Verbindungsoder Verknüpfungsherstellung liefert,
- Zugreifen **durch** einen Benutzer auf ein verschlüsseltes Dokument (82) in der Dokument-Servereinheit (20) und Durchführen eines Ladevorgangs des verschlüsselten Dokuments zu einer lokalen Wiedergabeeinheit (22) des Benutzers,
- benutzerseitige Abfrage der Information zur Verbindungs- oder Verknüpfungsherstellung mittels einer dem Benutzer zugeordneten Zugriffseinheit (18) bei der Verknüpfungsdatenbank (30) unter Verwendung der benutzerseitig aus dem verschlüsselten Dokument (82) erzeugten Signatur,
- benutzerseitiges Zugreifen auf die dem verschlüsselten Dokument (82) zugehörige Rekonstruktionsdatei (84) in der Rekonstruktions-Servereinheit (26) unter Verwendung der genannten abgefragten Information und
- benutzerseitiges Herstellen der unverschlüsselten Datei aus dem verschlüsselten Dokument (82) mittels der zugehörigen Rekonstruktionsdatei (84).

21. Verfahren nach Anspruch 20, **dadurch gekennzeichnet, dass** der Schritt des Ablegens des verschlüsselten Dokuments in der Dokumenten-Servereinheit (20) das Ablegen einer Mehrzahl von verschlüsselten Dokumentversionen desselben unverschlüsselten elektronischen Dokuments umfasst.

22. Verfahren nach Anspruch 20 oder 21, **gekennzeichnet durch** das lokale Abspeichern des hergestellten unverschlüsselten Dokuments mit einer datenmäßigen Individualisierung in der Art eines elektronischen Wasserzeichens.

## Claims

1. System for the copy-protected distribution of electronic documents with
- a document server unit (20) which is designed to allow loading access to a document to be selected out of a plurality of documents provided by the document server unit (20),
- an access unit (18) which is assigned to a user and which is designed to carry out loading access and to open the loaded electronic document by means of a playback unit (22),
wherein the electronic document has a document data structure which contains document data,
**characterised in that**
- associated with a document provider (14) is an electronic coding unit (24) for producing a coded form (82) of an electronic document as well as for producing an associated recovery file (84),
wherein the coded document (82) in the coded form is fully capable of execution, but not usable by the user (16) in the manner provided, and the presence of coding of the coded document is not machine-detectable from the document data structure without checking the contents of the document, and wherein the information contained in the recovery file (84) is suitable for restoring the original document from the coded document in conjunction with the latter,
- associated with the document data provider (14) is an electronic signature unit (28) for producing a signature of a coded document (82), with the aim of allowing the assignment of a recovery file (84) to an associated coded form of the electronic document,
- a recovery data memory unit (26) is assigned, which is designed to store a plurality of recovery files and which allows loading access of the user's access unit (18) to a selected recovery file (84),
- and an electronic assignment unit (30) is assigned, in which is entered information on making a connection or link to a recovery file (84) to be selected, which information can be scanned and delivered by the user's access unit (18),
- wherein there is provided a signature unit (35) on the user side, which produces a signature which is assigned to the coded document and with which the information on making a connection or link contained in the electronic assignment unit (30) can be accessed,
and wherein the access unit (18) is designed for cooperation with a recovery unit (34) on the user side in such a way that the latter makes it possible to combine a loaded, coded form (82) of an electronic document with an associated recovery file (84) loaded by the recovery data memory unit (26), so that an electronic document is produced in an uncoded form usable by the user.

2. System according to claim 1, **characterised in that** the electronic coding unit (24) is designed in such a way that, for coding an electronic document into data packets of the document data structure, the operations of transposing, removing a data packet, adding a data packet to a predetermined position in a sequence of data packets, or exchanging a data packet for a data packet preferably not contained in the original electronic document can be performed, by computer access to respective electronic storage regions of the electronic coding unit assigned to the data packets of the document data structure.

3. System according to claim 2, **characterised in that** the electronic coding unit (24) is designed to produce the recovery file with details of the transposed, removed, added or exchanged data packets.

4. System according to claim 2 or 3, **characterised in that** the coding unit (24) has:
- an analysis unit (54, 56) which is designed for access to an original data quantity of the electronic document as well as for electronic gathering of at least one sequence of information components of the original data quantity as a reaction to predefined or obtained format or structural data of the original data quantity,
- a manipulation unit (64) which is connected to the output of the analysis unit and which is designed
- to transpose or remove an information component in the original data quantity or to add an information component to a predetermined position in the sequence of information components or to exchange an information component for an information component preferably not contained in the original data quantity, as well as
- to produce a code data quantity (74) as recovery data with details of the transposed, removed, added or exchanged information components, which is formed so as to permit restoration of the original data quantity from the coded file.

5. System according to claim 4, **characterised in that** associated with the manipulation unit (64) is an equivalence unit (70) which, for at least one information component in the original data quantity, keeps at least one equivalence information component ready stored electronically, wherein the equivalence information component is formed so as to match the associated information component in grammar, format or syntax.

6. System according to claim 4 or 5, **characterised in that** the manipulation unit (64) is designed for cooperation with a semantic rule unit (72) which is designed in such a way that transposition, removal, addition or exchange takes place within the grammar, format or syntax which is defined by the format or structural data.

7. System according to any of claims 4 to 6, **characterised in that** associated with the manipulation unit (64) is a random control unit (68) which randomly controls transposition, removal, addition or exchange by the manipulation unit with respect to individual information components or sequence(s) of information components.

8. System according to any of claims 4 to 7, **characterised by** a coding parameter unit (66) which is associated with the manipulation unit (64) and which is designed for storing or adjusting predetermined parameters for transposition, removal, addition or exchange by the manipulation unit, and by which a coding depth reached by a number of transposition, removal, addition or exchange can be fixed.

9. System according to any of claims 4 to 8, **characterised by** a conversion unit (80) which is connected to the output of the manipulation unit (64) and which is designed to produce an electronically transferable volume file (82) from the coded data quantity (76) as a coded form of the electronic document as well as an executable program or script file (84) from the code data quantity (74) as a recovery file.

10. System according to any of claims 2 to 9, **characterised in that** the manipulation unit (64) is designed to produce a plurality of code data quantities (74) as recovery data, of which at least one when combined with the coded form of the document does not permit restoration of the original data quantity, but after combining leads to a data quantity which matches the original data quantity in syntax, format or grammar.

11. System according to any of claims 1 to 10, **characterised in that** the recovery unit (34) or the playback unit (22) has at least one manipulation unit which can be influenced with respect to programs by elements of a recovery file and which, for performing a running operation necessary for combining the coded form of the electronic document with the associated recovery file to produce the electronic document in the usable form or to open it, can be configured and influenced in such a way that only with a predetermined configuration of the manipulation unit does combining or opening lead to the usable uncoded electronic document, wherein the manipulation unit is constructed as a program library within the recovery or playback unit, or as a file which can be executed on an operating system platform of the access unit, as a command line, or as an element of a programming or script language which controls the recovery unit or playback unit.

12. System according to any of claims 1 to 11, **characterised in that** the electronic assignment unit (30) is a data bank server which is connected to an electronic data network and which with the recovery data memory unit (26) forms a common server unit, or which is spatially separate from the recovery data memory unit (26) and with information from the electronic assignment unit (30) makes it possible to make the connection or link for a plurality of different recovery server units (26).

13. System according to any of claims 1 to 12, **characterised by** a user identification or accounting unit (38) which is assigned to the recovery data memory unit and which is designed to gather user-individualising data, to perform a financial transaction with the user or to assign or manage user-specific or user group-specific access rights.

14. System according to any of claims 1 to 13, **characterised in that** the signature unit on the user side and the electronic signature unit (35, 28) are designed to perform an operation of reading algorithmically determined data items of the coded document (82) to produce the associated signature, which operation is based on an algorithm common to the signature units.

15. System according to any of claims 1 to 14, **characterised in that** the electronic document is an audio, video, animation, simulation, multimedia or program file or **in that** the document data structure is selected from the group comprising the data formats MP3, MPEG, XML.

16. System according to any of claims 1 to 15, **characterised in that** the access unit (18) or the playback unit (22) is designed, by means of a function unit (32) embedded therein, to perform automatic access to the assignment unit (30) after a loading access to an electronic document (82) from the document server unit (20), wherein the function unit (32) is designed to transfer an item of link or path information assigned to a document regarding its source, from the assignment unit (30) to the function unit (32).

17. System according to any of claims 1 to 16, **characterised in that** the assignment unit (30) has means for detecting user accesses with a signature which cannot be assigned to a recovery file (84) or does not exist in the assignment unit (30).

18. System according to any of claims 1 to 17, **characterised in that** the recovery unit (34) on the user side has means for producing an individualising marker or an electronic watermark in the uncoded document produced, wherein the individualising marker corresponds to the marking of the corresponding coded document.

19. System according to any of claims 1 to 18, **characterised in that** the local recovery unit (34) has means to allow or prevent local storage of an uncoded document, as a function of control data obtained by the recovery server unit (26).

20. Method for the copy-protected distribution of electronic documents, **characterised by** the steps of:
- production (24) of a coded form (82) of an electronic document as well as of an associated recovery file (84) by a document provider (14),
wherein the coded document (82) in the coded form is fully capable of execution, but not usable by the user in the manner provided, and the presence of coding of the coded document (82) is not machine-detectable from the document data structure without checking the contents of the document, and wherein the information contained in the recovery file (84) is suitable for restoring the original document from the coded document in conjunction with the latter,
- filing of the coded document (82) by the document provider (14) in a publicly accessible document server unit (20),
- filing of the recovery file (84) by the document provider (14) in a publicly accessible recovery server unit (26),
- production (28) of a signature of the coded document (82) by the document provider (14), with the aim of allowing the assignment of a recovery file (84) to an associated coded form (82) of the electronic document,
wherein the means for producing the signature (35) are accessible by the user from the coded document,
- entry of the signature and entry of information on making a connection or link, which refers to a recovery file (84) belonging to the signature, by the document provider in a publicly scannable data bank (30), wherein, upon transmission of a signature associated with a coded document by a user, the data bank delivers to the latter the associated information on making a connection or link,
- access by a user to a coded document (82) in the document server unit (20) and performance of an operation of loading the coded document into a local playback unit (22) of the user,
- scanning of the information on making a connection or link by the user by means of an access unit (18) assigned to the user in the link data bank (30), using the signature produced by the user from the coded document (82),
- access by the user to the recovery file (84) belonging to the coded document (82) in the recovery server unit (26), using the said scanned information, and
- making of the uncoded file by the user from the coded document (82) by means of the associated recovery file (84).

21. Method according to claim 20, **characterised in that** the step of filing the coded document in the document server unit (20) includes filing a plurality of coded document versions of the same uncoded electronic document.

22. Method according to claim 20 or 21, **characterised by** local storage of the uncoded document made with data individualisation after the fashion of an electronic watermark.

## Revendications

1. Système de distribution avec protection anti-copie de documents électroniques, comprenant
- un serveur de documents (20), qui est conçu pour permettre un accès pour chargement d'un document à sélectionner parmi une pluralité de documents proposés par le serveur de documents (20),
- une unité d'accès (18), affectée à un utilisateur, qui est conçue pour exécuter l'accès pour chargement et pour ouvrir le document électronique chargé au moyen d'une unité de reproduction (22), dans laquelle
le document électronique a une structure de données, qui contient les données du document,
**caractérisé en ce que**
- une unité de codage électronique (24), destinée à générer une forme codée (82) d'un document électronique, ainsi qu'à générer un fichier de reconstruction (84) correspondant, est associée à un fournisseur de documents (14), le document codé (82) étant intégralement exploitable dans la forme codée, mais n'étant pas utilisable par l'utilisateur (16) dans la manière prévue et la présence d'un codage du document codé ne pouvant être détectée par un appareil à partir de la structure de données du document sans un contrôle du contenu du document, et les informations contenues dans le fichier de reconstruction (84) étant destinées, en liaison avec le document codé, à restaurer le document original à partir de celui-ci,
- une unité de signature électronique (28) destinée à générer une signature pour un document codé (82) est associée au fournisseur de documents (14), en vue de permettre l'association d'un fichier de reconstruction (84) à une forme codée correspondante du document électronique,
- une mémoire des données de reconstruction (26) est allouée, laquelle est conçue pour stocker une pluralité de fichiers de reconstruction et laquelle permet à l'unité d'accès (18) de l'utilisateur d'accéder à un ficher de reconstruction (84) sélectionné, en vue de le charger,
- et une unité de correspondance électronique (30) est allouée, dans laquelle sont enregistrées des informations pour établir une liaison ou une connexion avec un fichier de reconstruction (84) à sélectionner, lesquelles informations peuvent être lues et fournies par l'unité d'accès (18) de l'utilisateur,
- une unité de signature (35) du côté utilisateur est prévue pour générer une signature associée à un document codé, laquelle permet d'accéder aux informations contenues dans l'unité de correspondance (30) électronique pour établir la liaison ou la connexion,
et l'unité d'accès (18) destinée à coopérer avec une unité de reconstruction (34) du côté utilisateur étant conçue de telle sorte que celle-ci permet de réunir une forme codée (82) chargée d'un document électronique avec un fichier de reconstruction (84) correspondant, chargé par la mémoire des données de reconstruction (26), de manière à générer pour l'utilisateur un document électronique dans une forme non codée.

2. Système selon la revendication 1, **caractérisé en ce que** l'unité de codage électronique (24) est conçue de telle sorte que, pour coder un document électronique sur des paquets de données de la structure du document, on peut effectuer les opérations : permutation, suppression d'un paquet de données, ajout d'un paquet de données à un emplacement prédéterminé dans une suite de paquets de données ou substitution d'un paquet de données par un paquet de données de préférence non contenu dans le document électronique initial, au moyen d'un accès de l'ordinateur à chacun des espaces mémoire électroniques dans l'unité de codage électronique, associés aux paquets de données de la structure du document.

3. Système selon la revendication 2, **caractérisé en ce que** l'unité de codage électronique (24), destinée à générer le fichier de reconstruction, est formée avec des renseignements sur les paquets de données permutés, supprimés, ajoutés ou substitués.

4. Système selon la revendication 2 ou 3, **caractérisé en ce que** l'unité de codage (24) comporte :
- une unité d'analyse (54, 56), qui est conçue pour accéder à une quantité initiale de données du document électronique, ainsi que pour la saisie électronique d'au moins une suite de composants d'information de la quantité initiale de données en réaction à des données sur le format ou la structure, prédéfinies ou calculées, de la quantité initiale de données,
- une unité de manipulation (64), qui est montée en aval de l'unité d'analyse et qui est conçue
- pour permuter ou supprimer une composante d'information dans la quantité initiale de données ou pour ajouter une composante d'information à un emplacement prédéfini dans la suite des composantes d'information ou pour substituer une composante d'information par une composante d'information de préférence non contenue dans la quantité initiale de données, ainsi que
- pour générer une quantité de données de codage (74) sous forme de données de reconstruction avec des renseignements sur les composantes d'information permutées, supprimées, ajoutées ou substituées, laquelle est formée de telle sorte qu'elle permet de restaurer la quantité initiale de données à partir du fichier codé.

5. Système selon la revendication 4, **caractérisé en ce que** l'unité de manipulation (64) est associée à une unité d'équivalence (70), qui met à disposition sous forme électronique mémorisée au moins une composante d'information d'équivalence pour au moins une composante d'information dans la quantité initiale de données, la composante d'information d'équivalence étant formée de telle sorte qu'elle coïncide, par la construction grammaticale, le format ou la construction syntaxique, avec la composante d'information correspondante.

6. Système selon la revendication 4 ou 5, **caractérisé en ce que** l'unité de manipulation (64) est conçue pour coopérer avec une unité de réglage sémantique (72), qui est aménagée de telle sorte que la permutation, la suppression, l'ajout ou la substitution sont effectuées à l'intérieur de la grammaire, du format ou de la syntaxe, qui est défini par les données sur le format ou la structure.

7. Système selon l'une quelconque des revendications 4 à 6, **caractérisé en ce que** l'unité de manipulation (64) est associée à une unité de commande aléatoire (68), qui commande en fonction de la part d'aléatoire la permutation, la suppression, l'ajout ou la substitution de composantes d'information isolées ou de suites de composantes d'information, concernées par l'unité de manipulation.

8. Système selon l'une quelconque des revendications 4 à 7, **caractérisé par** une unité de paramètres de codage (66), qui est associée à l'unité de manipulation (64) et qui est conçue pour enregistrer ou régler des paramètres prédéfinis pour la permutation, la suppression, l'ajout ou la substitution par l'unité de manipulation, par laquelle peut être définie une profondeur de codage obtenue par un nombre de permutation, suppression, ajout ou substitution.

9. Système selon l'une quelconque des revendications 4 à 8, **caractérisé par** une unité de conversion (80), qui est montée en aval de l'unité de manipulation (64) et qui est conçue pour générer, à partir de la quantité de données (76) codée, un fichier volume (82) transmissible par voie électronique, présenté sous forme codée du document électronique, ainsi que, à partir de la quantité de données de codage (74), un ficher programme ou fichier script (84) exploitable, présenté sous forme de fichier de reconstruction.

10. Système selon l'une quelconque des revendications 2 à 9, **caractérisé en ce que** l'unité de manipulation (64) destinée à générer une pluralité de quantités de données de codage (74) est conçue sous forme de données de reconstruction, parmi lesquelles au moins une, au moment de la jonction avec la forme codée du document, n'autorise pas la restauration de la quantité initiale de données, mais après la jonction engendre une quantité de données qui coïncide, par la construction syntaxique, le format ou la construction grammaticale, avec la quantité initiale de données.

11. Système selon l'une quelconque des revendications 1 à 10, **caractérisé en ce que** l'unité de reconstruction (34) ou l'unité de reproduction (22) comporte au moins une unité de manipulation qui, par la technique de programmation, est susceptible d'être influencée par des éléments d'un fichier de reconstruction et qui peut être configurée ou influencée pour l'exécution d'un processus d'exploitation nécessaire pour la jonction de la forme codée du document électronique avec le fichier de reconstruction correspondant, en vue de générer le document électronique dans la forme utilisable ou en vue d'ouvrir celui-ci, de telle sorte que, seulement dans le cas d'une configuration prédéterminée de l'unité de manipulation, la jonction ou l'ouverture fournit un document électronique non codé utilisable, l'unité de manipulation étant réalisée sous forme de bibliothèque de programmes à l'intérieur de l'unité de reconstruction ou de reproduction, ou sous la forme d'un fichier exécutable sur une plate-forme d'exploitation de l'unité d'accès, sous forme de ligne d'instruction ou sous forme d'élément d'un langage de programmation ou d'un langage script commandant l'unité de reconstruction ou l'unité de reproduction.

12. Système selon l'une quelconque des revendications 1 à 11, **caractérisé en ce que** l'unité de correspondance électronique (30) est un serveur de base de données, qui est relié à un réseau de données électroniques et qui forme avec la mémoire des données de reconstruction (26) un serveur commun, ou qui est séparé physiquement de la mémoire des données de reconstruction (26) et, avec des informations issues de l'unité de correspondance électronique (30), permet d'établir la liaison ou connexion pour une pluralité de serveurs de reconstruction (26) différents.

13. Système selon l'une quelconque des revendications 1 à 12, **caractérisé par** une unité comptable ou d'identification de l'utilisateur (38) associée à la mémoire des données de reconstruction, laquelle est conçue pour l'enregistrement par un utilisateur de données individualisées, pour la mise en oeuvre d'une transaction financière avec l'utilisateur ou pour l'affectation ou la gestion de droits d'accès spécifiques à l'utilisateur ou à un groupe d'utilisateurs.

14. Système selon l'une quelconque des revendications 1 à 13, **caractérisé en ce que** l'unité de signature du côté utilisateur et l'unité de signature électronique (35, 28), destinées à l'exécution d'une opération de lecture, basée sur un algorithme commun aux unités de signature, pour lire les positions des données du document codé (82) définies par l'algorithme, sont conçues pour générer la signature correspondante.

15. Système selon l'une quelconque des revendications 1 à 14, **caractérisé en ce que** le document électronique est un fichier audio, vidéo, d'animation, de simulation, multimédia ou un fichier programme ou **en ce que** la structure des données du document est sélectionnée dans le groupe qui contient les formats de données MP3, MPEG, XML.

16. Système selon l'une quelconque des revendications 1 à 15, **caractérisé en ce que** l'unité d'accès (18) ou l'unité de reproduction (22) est conçue au moyen d'une unité fonctionnelle (32) incluse dans celle-ci pour l'exécution d'un accès automatique à l'unité de correspondance (30) à la suite d'un accès pour chargement à un document électronique (82), pour le charger à partir du serveur de documents (20), l'unité fonctionnelle (32) étant conçue pour transmettre un paramètre définissant un lien ou un chemin associé à un document et concernant la source dudit paramètre à partir de l'unité de correspondance (30) vers l'unité fonctionnelle (32).

17. Système selon l'une quelconque des revendications 1 à 16, **caractérisé en ce que** l'unité de correspondance (30) comporte des moyens pour enregistrer des accès d'utilisateur avec une signature ne pouvant être associée à un fichier de reconstitution (84) ou n'existant pas dans l'unité de correspondance (30).

18. Système selon l'une quelconque des revendications 1 à 17, **caractérisé en ce que** l'unité de reconstruction (34) du côté utilisateur comporte des moyens pour générer un attribut d'individualisation ou un filigrane électronique dans le document non codé généré, l'attribut d'individualisation correspondant au marqueur du document codé correspondant.

19. Système selon l'une quelconque des revendications 1 à 18, **caractérisé en ce que** l'unité de reconstruction (34) locale comporte des moyens pour permettre ou empêcher un enregistrement local d'un document non codé, en fonction de données de commande fournies par le serveur de reconstruction (26).

20. Procédé de distribution avec protection anti-copie de documents électroniques, **caractérisé par** les étapes suivantes :
- élaboration (24) d'une forme codée (82) d'un document électronique, ainsi que d'un fichier de reconstruction (84) par un fournisseur de documents (14), le document codé (82) étant exploitable intégralement dans la forme codée, mais n'étant pas utilisable par l'utilisateur (16) dans la manière prévue et la présence d'un codage du document codé ne pouvant être détectée par un appareil à partir de la structure de données du document sans un contrôle du contenu du document, et les informations contenues dans le fichier de reconstruction (84) étant destinées, en liaison avec le document codé, à restaurer le document original à partir de celui-ci,
- dépôt du document codé (82) par le fournisseur de documents (14) dans un serveur de documents (20) publiquement accessible,
- dépôt du fichier de reconstruction (84) par le fournisseur de documents (14) dans un serveur de reconstruction (26) publiquement accessible,
- élaboration (28) d'une signature du document électronique codé (82) par le fournisseur de documents (14) en vue de permettre l'affectation d'un fichier de reconstruction (84) à une forme codée (82) correspondante du document électronique,
les moyens pour l'élaboration de la signature (35) étant accessibles du côté utilisateur à partir du document codé,
- enregistrement de la signature et enregistrement d'informations pour l'établissement d'une liaison ou connexion, qui font référence à un fichier de reconstruction (84) associé à la signature, par le fournisseur de documents dans une base de données (30) publiquement interrogeable, la base de données fournissant, moyennant la transmission, par l'intermédiaire d'un utilisateur, d'une signature associée à un document codé, les informations correspondantes pour l'établissement d'une liaison ou connexion,
- accès par un utilisateur à un document codé (82) dans le serveur de documents (20) et exécution d'un processus de chargement du document codé vers une unité de reproduction (22) locale de l'utilisateur,
- lecture du côté utilisateur de l'information pour l'établissement d'une liaison ou connexion au niveau de la base de données de connexion (30), au moyen d'une unité d'accès (18) associée à l'utilisateur, en utilisant la signature générée du côté utilisateur à partir du document codé (82),
- accès du côté utilisateur au fichier de reconstruction (84) associé au document codé (82) dans le serveur de reconstruction (26), moyennant l'utilisation de l'information interrogée évoquée, et
- élaboration du côté utilisateur du fichier non codé à partir du document codé (82) au moyen du fichier de reconstruction (84) correspondant.

21. Procédé selon la revendication 20, **caractérisé en ce que** l'étape de dépôt du document codé dans le serveur des documents (20) contient le dépôt d'une pluralité de versions codées du même document électronique non codé.

22. Procédé selon la revendication 20 ou 21, **caractérisé par** l'enregistrement local du document non codé généré, accompagné d'une individualisation en fonction des données du type filigrane électronique.
